(19) Europäisches Patentamt
European Patent Office
Office européen des brevets

(11) Publication number: **0 220 747 B1**

(12) **EUROPEAN PATENT SPECIFICATION**

(45) Date of publication of patent specification: **22.01.92**

(51) Int. Cl.5: **C09K 19/02**, G02F 1/137, C09K 19/46

(21) Application number: **86115156.1**

(22) Date of filing: **31.10.86**

(54) **Ferroelectric smectic C mixture, method for controlling its tilt angle, and light switching element.**

(30) Priority: **01.11.85 JP 246066/85**

(43) Date of publication of application:
**06.05.87 Bulletin 87/19**

(45) Publication of the grant of the patent:
**22.01.92 Bulletin 92/04**

(84) Designated Contracting States:
**CH DE FR GB LI**

(56) References cited:
**EP-A- 0 115 693**
**EP-A- 0 157 519**

**FERROELECTRICS, vol. 59, 1984, pages 25-67, Gordon & Breach, Science Publishers Inc., US; N.A. CLARK et al.: "Surface-stabilized ferroelectric liquid crystal electro-optics: new multistate structures and devices"**

**CONFERENCE RECORD OF THE 1985 INTERNATIONAL DISPLAY RESEARCH CONFERENCE, Hyatt Islandia, San Diego, 15th-17th October 1985, pages 213-221, IEEE; S.T. LAGERWALL et al.: "Ferroelectric liquid crystals for displays"**

**PATENT ABSTRACTS OF JAPAN, vol. 11, no. 200 (C-431)[2647], 27th June 1987; & JP-A-62 22 889 (CHISSO CORP.) 31-01-1987**

(73) Proprietor: **CHISSO CORPORATION**
**6-32, Nakanoshima 3-chome Kitaku**
**Osaka(JP)**

(72) Inventor: **Furukawa, Kenji**
**16-7, Kurihama 1-chome**
**Yokosukashi Kanagawaken(JP)**
Inventor: **Terashima, Kanetsugu**
**19-21, Yanagicho Kanazawaku**
**Yokohamashi Kanagawaken(JP)**
Inventor: **Ichihashi, Mitsuyoshi**
**10-3, Otsutomocho Kanazawaku**
**Yokohamashi Kanagawaken(JP)**

(74) Representative: **Hansen, Bernd, Dr.rer.nat. et al**
**Hoffmann, Eitle & Partner Patentanwälte Arabellastrasse 4 Postfach 81 04 20**
**W-8000 München 81(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

**Description**

BACKGROUND OF THE INVENTION

1. Field of the Invention

This invention relates to a ferroelectric chiral smectic liquid crystal. More particularly it relates to a method for controlling the tilt angle of a ferroelectric smectic C liquid crystal mixture.

2. Description of the Related Art

At present, liquid crystal compounds have been broadly used as a display material, and most of such liquid crystal display elements are those according to TN (Twisted Nematic) display mode and also liquid crystal materials used therefor belong to nematic phase. Since such display elements according to TN display mode are of non-emissive type, they scarcely make eyes tired, their power consumption is very small and they are of a lightweight and small type; hence utilizing such characteristics, application use of the elements has come to be rapidly broadened, and recently products having a large display surface have been produced. However, they have such unsolved drawbacks that the response is slow and the display is not seen depending upon angles of view. Thus, in order to make use of the merits of liquid crystal display elements and thereby cover up the drawbacks, it is indispensable to develop a novel display mode in place of TN display mode. As one of such attempts, there is a display element utilizing the light switching phenomenon of ferroelectric liquid crystals according to N.A. Clark et al (see Appl. Phys. Lett. 36,899 (1980)). As to ferroelectric liquid crystals, the presence thereof was evidenced by R.B. Meyer et al for the first time, in the year of 1975, (see J. de Phys., 36 L 69, 1975), and the ferroelectricity develops only in the smectic phase having a helical structure (i.e. chiral smectic phase). As the chiral smectic phase, smectic C phase, I phase, F phase, G phase and H phase (hereinafter referred to as $S_C$* phase, $S_I$* phase, $S_F$* phase, $S_G$* phase, and $S_H$* phase, respectively) have been known. In the chiral smectic phase, the liquid crystal molecules form a layer and tilt to the plane of the layer, the tilt direction deviating from a layer to a layer little by little to form a helical structure and the helical axis being perpendicular to the plane of the layer. In the chiral smectic phase, since a spontaneous polarization occurs, when an electric field in the parallel direction to the layer is impressed, the molecules turn over by a $\pi$ rotation around helical axes thereof by inverting the polarity of applied voltages. This switching phenomenon of the ferroelectric liquid crystal is utilized in a display element.

Among the chiral smectic phases, $S_C$* has now been particularly noted. As to the display mode utilizing the switching phenomenon of $S_C$* phase, the following two modes may be considered: one of the modes is of a birefringence type using two sheets of polarizers and another is of guest-host type using a dichroic dyestuff.

The specific features of these display modes are illustrated as follows:

(1) the response rate is very high,
(2) there are memory properties, and
(3) dependency upon angle of view is small,

and further the modes have a possibility of a high-multiplexed display; thus they are very attractive.

When a brightness/darkness display is to be carried out according to the birefringence type display mode using two sheets of polarizers, the transmittance in the bright field of view relative to the dark field of view where the value of the transmittance is zero, is expressed by the following equation:

$$I/I_0 = \sin^2(4\theta)\,\sin^2(\pi \cdot d \cdot \Delta n/\lambda)$$

wherein I represents the intensity of transmitted light; $I_0$, the intensity of incident light; $\theta$, the angle of the helical axis against the major axis of molecule (tilt angle); d, the cell thickness; $\Delta n$, the anisotropy of refractive index; $\lambda$, the wavelength of incident light.

According to this equation, in the case of $\theta = 22.5°$ and $d \cdot \Delta n = 0.26\ \mu m$, a high transmittance of average 90% or higher is obtained over the whole region of visible rays. In the aspect of practical use, it is difficult to correctly prepare a liquid crystal material of $\theta = 22.5°C$, but if a practical contrast obtained is 80% of the contrast in the case of $\theta = 22.5°$, there is almost no difference as compared with the liquid crystal material of $\theta = 22.5°$ in the aspect of display; hence the range of tilt angle which is tolerable in the aspect of contrast is $\theta = 22.5° \pm 6.5°$ (i.e. $\theta = 16° \sim 29°$). Liquid crystal materials having a tilt angle in this range can be said to be practically most ideal.

On the other hand, in the case of a guest-host type display element of a tilt angle of $\theta$ using a dyestuff, the absorption intensity is proportional to $\sin^2(2\theta)$ and reaches the maximum value at $\theta = 45^\circ$. Here, even if the absorption intensity of the element is $80^\circ$ of the maximum absorption intensity, the element has practically no large difference from the element of $\theta = 45^\circ$ in the aspect of contrast; hence the range of $\theta$ wherein 80% of the maximum absorption is afforded, that is, the lower and upper limits of $\theta$ which are tolerable in the aspect of contrast can be calculated to be $32^\circ$ and $58^\circ$.

Ferroelectric liquid crystal compounds known at present are illustrated in Table 1 described later. The reporters and the literatures of these compounds are as follows: PH. Martinot-lagarde et al, Mol Cryst. Liq. Cryst., 75,249 (1981); Takashi Inukai et al, the 10th liquid Crystal Forum, Collected Preliminary Manuscripts, pp 164, pp 166 (1984); Kayako Hori, The 10th Liquid Crystal Forum, Collected Preliminary Manuscripts, pp 112 (1984); etc.

As seen from Table 1, the tilt angles in $S_C$* phase of most of the compounds are $30^\circ$ or less. Further, the compound of $\theta = 45^\circ$ has a very short helical pitch (e.g. see M.F. Bone et al; Mol. Cryst. Liq. Cryst., 102 (1984) 331).

Further, most of compounds have a higher temperature range wherein ferroelectric properties are exhibited, than room temperature and moreover the range is narrow; hence it is impossible to use these compounds as they are, as a material for guest-host type display elements.

For example, most of the ferroelectric liquid crystal compounds shown in Table 1 have a temperature range wherein ferroelectric properties are exhibited, i.e. a temperature range wherein $S_C$* phase, $S_I$* phase, $S_F$* phase, $S_G$* phase and $S_H$* phase are exhibited, higher than room temperature; hence it is impossible to use these compounds as they are, as a material for display elements. Further chiral smectic liquid crystal compounds have a possibility of including smectic B phase and smectic E phase ((hereinafter abbreviated to $S_B$ phase and $S_E$ phase) each exhibiting no ferroelectric properties; hence it is not easy to obtain a chiral smectic liquid crystal composition exhibiting ferroelectric properties within a service temperature range.

Table 1

| | Compound | Phase transition point * | Tilt angle** (T-Tc=-10°C) |
|---|---|---|---|
| $A_1$ | 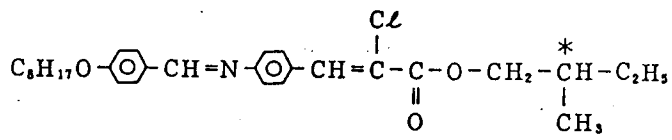 | $C \xrightarrow{41°C} S_A \xrightarrow{66°C} I$; $S_A \xrightarrow{38°C} S_C^* \rightarrow C$ | 16° |
| $A_2$ | 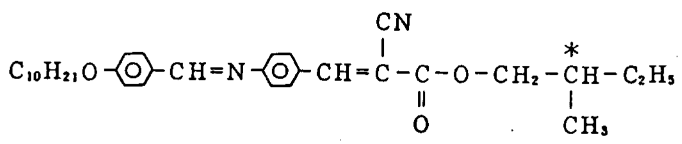 | $C \xrightarrow{92°C} S_A \xrightarrow{104°C} I$; $S_A \xrightarrow{75°C} S_C^* \rightarrow C$ | 18° |
| $A_3$ | 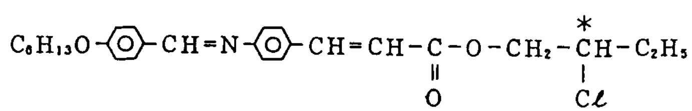 | $C \xrightarrow{60°C} S_G^* \xrightarrow{67°C} S_I^* \xrightarrow{74°C} S_C^* \xrightarrow{80°C} S_A \xrightarrow{135°C} I$ | 12° *** |

* : Symbols C, $S_A$ and I in the column of phase transition point represent crystalline, smectic A and isotropic liquid phases, respectively. The other phase symbols have already been referred to.

** : The tilt angle in Table 1 was measured at a temperature T 10°C or 20°C lower than the upper limit temperature $T_C$ of $S_C^*$ phase (shown respectively in terms of $T - T_C = -10°C$ or $T - T_C = -20°C$).

***: Value of $T - T_C = -5°C$.

Table 1 (-Continued)

| | Compound | Phase transition point (°C) | Tilt angle (°) T-Tc=-10℃ | Tilt angle (°) T-Tc=-20℃ |
|---|---|---|---|---|
| $A_4$ | 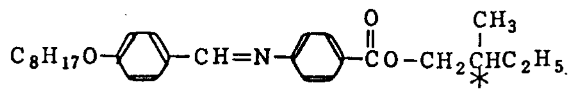 | C —41.3→ $S_A$ —66.0→ I; $S_A$ —39.3→ $S_C^*$ → C | 23 | |
| $A_5$ | 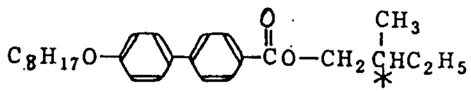 | C —46.1→ $S_A$ —63.5→ I; $S_A$ —43.9→ $S_C^*$ → C | 22 | |
| $A_6$ | 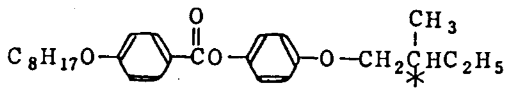 | C —46.3→ $S_A$ —57.8→ I; $S_A$ —42.1→ $S_C^*$ —22.0→ $S_B$ → C | 19.8 | 22 |
| $A_7$ | 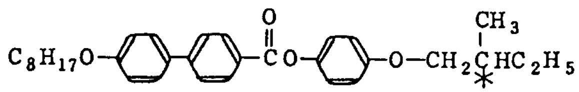 | C —101.3→ $S_C^*$ —149.9→ $S_A$ —189.3→ I; $S_C^*$ —104.3→ $S_B$ → C | 15.6 | 18.6 |
| $B_1$ | 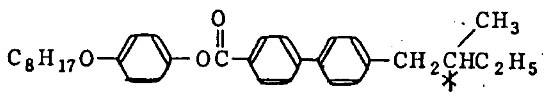 | C —76→ $S_C^*$ —88.6→ Ch —155.4→ I | 45 | 45 |
| $A_8$ | 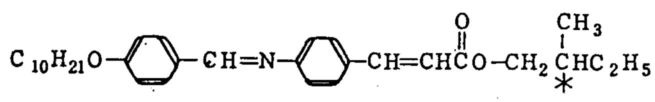 | C —76→ $S_C^*$ —95→ $S_A$ —117→ I; $S_C^*$ —63→ $S_H^*$ → C | 20.0 | 27.4 |
| $A_9$ | 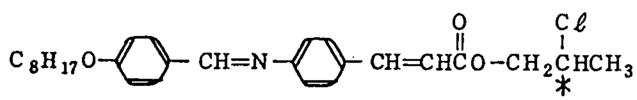 | C —60→ $S_H^*$ —64→ $S_C^*$ —78→ $S_A$ —135→ I | 15.1 | 20.3 |
| $A_{10}$ | 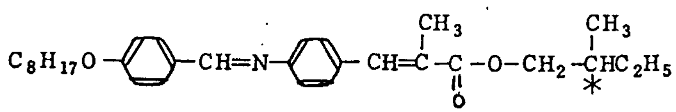 | C —49→ $S_C^*$ —58→ $S_A$ —94→ I | 16.3 | 21.2 |

## SUMMARY OF THE INVENTION

As apparent from the foregoing, an object of the present invention is to provide a method for controlling the tilt angle of a ferroelectric smectic C liquid crystal mixture to 16° to 29° or 32° to 58°.

Another object of the present invention is to provide a ferroelectric chiral smectic C composition suitable to birefringence type display or guest-host type display.

Still another object of the present invention is to provide a light-switching element having a high response rate.

The present invention in a first aspect resides in:

(1) In the preparation of a ferroelectric smectic C mixture having at least two components at least one of which is a liquid crystal compound having smectic A phase and ferroelectric smectic C phase or at least two components comprising a liquid crystal compound having smectic C phase and smectic A phase and a chiral compound, a method for controlling the tilt angle of said ferroelectric smectic C mixture, which method comprises having said components having smectic A phase contained in said ferroelectric smectic C mixture in excess of the quantity of at least one compound having no smectic A phase contained in said at least two components, so that said ferroelectric smectic C mixture exhibits smectic A phase, to be thereby able to adjust the tilt angle of said ferroelectric smectic C phase to a definite value in the range of 16° to 29°; and

(2) In the preparation of a ferroelectric smectic C mixture having at least two components at least one of which is a liquid crystal compound having ferroelectric smectic c phase and having no smectic A phase or at least two components comprising a liquid crystal compound having smectic C phase and having no smectic A phase and a chiral compound, a method for controlling the tilt angle of said ferroelectric smectic C mixture, which method comprises having at least one component having no smectic A phase contained in said ferroelectric liquid crystal mixture in excess of the quantity of said components having smectic A phase contained in said at least two components, so that said ferroelectric smectic C mixture exhibits no smectic A phase, to be thereby able to adjust the tilt angle of said ferroelectric smectic C phase to a definite value in the range of 32° to 58°.

The present invention in a second aspect resides in

(3) a method of preparing a ferroelectric smectic C mixture, in which at least two components are mixed, at least one of which is a liquid crystal compound having smectic A phase and ferroelectric smectic C phase or in which at least two components are mixed comprising a liquid crystal compound having smectic C phase and smectic A phase and a chiral compound, and

the tilt angle of said ferroelectric smectic C mixture is controlled by the method of claim 1 to thereby produce a ferroelectric smectic C mixture having a ferroelectric smectic C phase with a tilt angle in the range of 16° to 29°.

and (4) a method of preparing a ferroelectric smectic C mixture in which at least two components are mixed, at least one of which is a liquid crystal compound having ferroelectric smectic C phase and having no smectic C phase or in which at least two components are mixed comprising a liquid crystal compound having smectic C phase and having no smectic A phase and a chiral compound, and

the tilt angle of said ferroelectric smectic C mixture is controlled by the method of claim 2 to thereby produce a ferroelectric smectic C mixture having a ferroelectric smectic C phase with a tilt angle in the range of 32° to 58°.

## BRIEF DESCRIPTION OF THE DRAWINGS

Figs. 1~4 show a chart illustrating the phase diagram and the tilt angle of a two-component mixture system, respectively. In the figures, $S_C$*, $S_A$, Ch and $I_{SO}$ represent chiral smectic C phase, smectic A phase, cholesteric phase and isotropic liquid phase, respectively.

## DETAILED DESCRIPTION OF PREFERRED EMBODIMENTS

As to the pahse series present on the higher temperature side relative to $S_C$* phase of chiral smectic liquid crystal compounds exhibiting $S_C$* phase or mixtures thereof, the following 4 series may be considered:

(i) $S_C$*-$S_A$-$I_{SO}$
(ii) $S_C$*-$S_A$-Ch-$I_{SO}$
(iii) $S_C$*-Ch-$I_{SO}$
(iv) $S_C$*-$I_{SO}$

wherein $S_A$ represents smectic A phase; Ch, cholesteric phase and $I_{SO}$, isotropic phase.

The present inventors have made extensive research on the correlationship between the phase series and the tilt angle of various ferroelectric liquid crystal compounds, and as result, have found the following surprising fact (in Table 2, examples of compounds exhibiting $S_C$* phase or $S_C$ phase are shown together

with phases adjacent to $S_C$* phase or $S_C$ phase on the higher temperature side relative thereto and the values of the tilt angle at a temperature (T) 20 °C lower than the transition point ($T_c$) of these phases to the higher temperature side phases) :

As shown in Table 2, chiral smectic liquid crystal compounds having phase series (iii) and (iv) wherein no $S_A$ phase is exhibited on the higher temperature side relative to $S_C$* phase have a tendency that their tilt angles become very large ($\theta \gtrsim 30$ °C), whereas phase series ((i) and (ii)) exhibiting $S_A$ phase on the higher temperature side relative thereto have a smaller tilt angle ($\theta < 30$ °).

Thus it is seen that when a ferroelectric smectic C liquid crystal mixture suitable to birefringence display mode is prepared, a chiral smectic liquid crystal compound exhibiting the above phase series of (i) or (ii) is used as a main component and if necessary, a chiral smectic liquid crystal exhibiting the above phase series of (iii) or (iv) having a large tilt angle is used in a small quantity and the tilt angle is controlled to be in the range of 16 ° to 29 °.

Table 2

| No. | Compound | Phase on the higher temperature side relative to $S_C$* or $S_C$ phase | Tilt angle (T−Tc= −20℃) |
| --- | --- | --- | --- |
| $B_2$ | 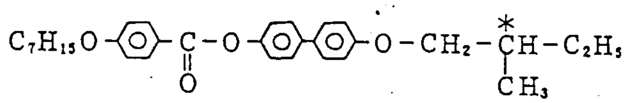 | Ch | 43° |
| $B_3$ | 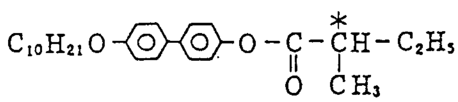 | Ch | |
| $B_4$ | 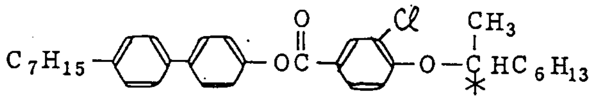 | Ch | 38° |
| $B_5$ | 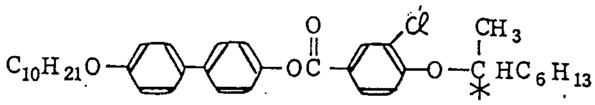 | I | 41° |
| $B_6$ | 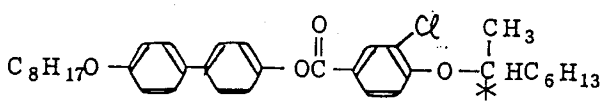 | Ch | 41° |
| $B_7$ | 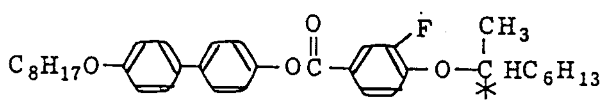 | Ch | 36° |
| $B_8$ | 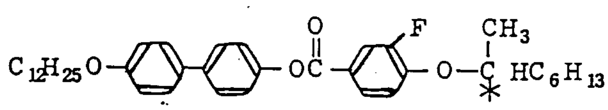 | I | 38° |
| $B_9$ | 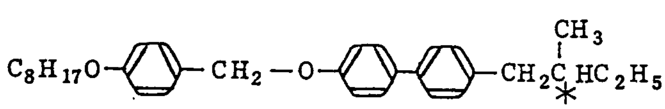 | I | |
| $B_{10}$ | 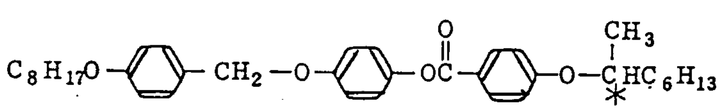 | Ch | 43° |
| $B_{11}$ | 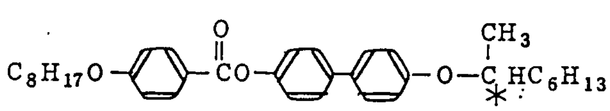 | Ch | 34° |
| $B_{12}$ | 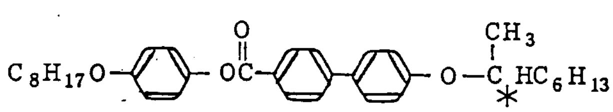 | Ch | 39° |

Table 2 (-continued)

| No. | Compound | Phase on the higher temperature side relative to $S_C^*$ or $S_C$ phase | Tilt angle (T−Tc= −20℃) |
|---|---|---|---|
| $B_{13}$ | 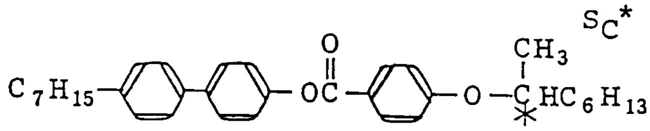 | Ch | 42° |
| $B_{14}$ | 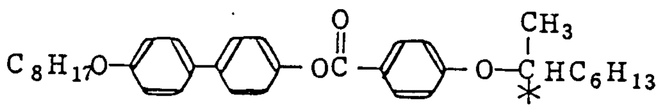 | Ch | 45° |
| $B_{15}$ | 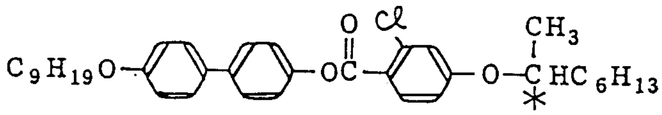 | Ch | |
| $B_{16}$ | 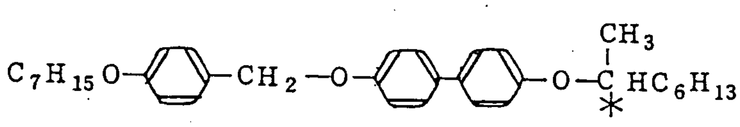 | I | 35° |
| $B_{17}$ | 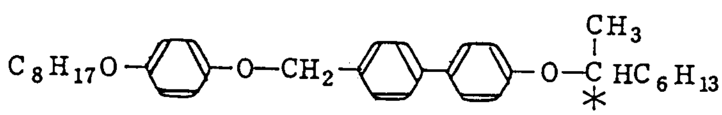 | I | 33° |
| $B_{18}$ | 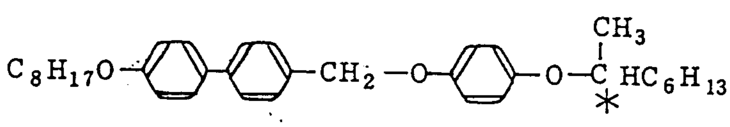 | I | 31° |
| $B_{19}$ | 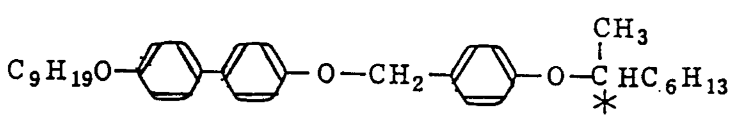 | I | 41° |
| $B_{20}$ | 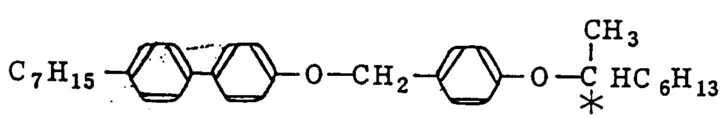 | I | 30° |
| $B_{21}$ | 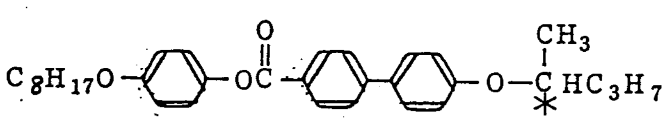 | Ch | 38° |

Table 2 (-continued)

| No. | Compound | Phase on the higher temperature side relative to $S_C^*$ or $S_C$ phase | Tilt angle $(T-T_c=-20℃)$ |
|---|---|---|---|
| $B_{22}$ | 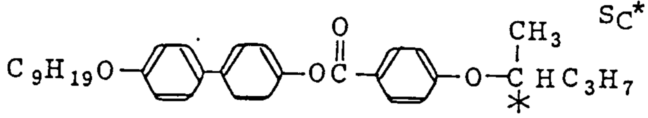 | I | 44° |
| $B_{23}$ | 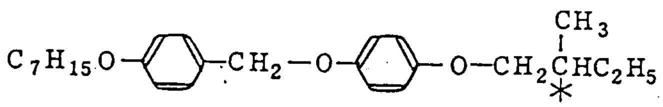 | I | |
| $B_{24}$ | 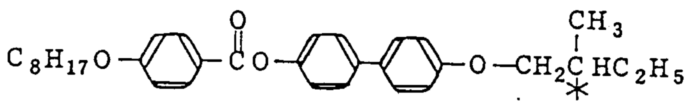 | Ch | |
| $B_{25}$ | 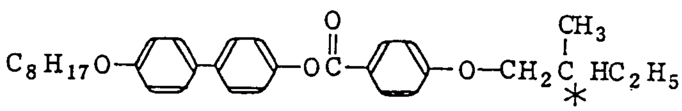 | Ch | 42° |
| $B_{26}$ | 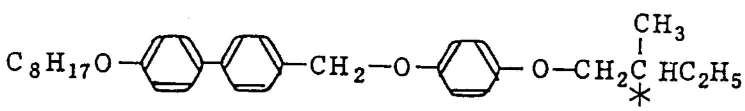 | I | |
| $B_{27}$ | 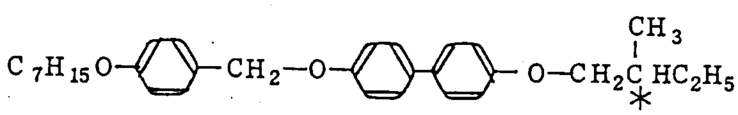 | I | |
| $B_{28}$ | 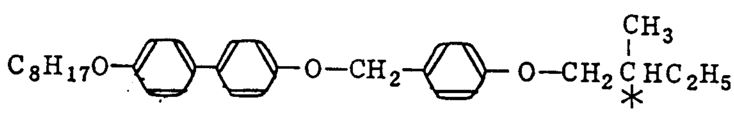 | I | 36° |
| $B_{29}$ | 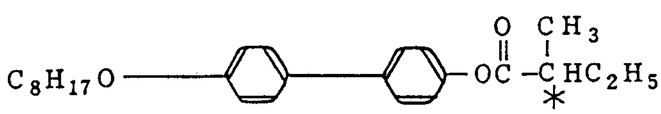 | Ch | |

Table 2 (-continued)

| No. | Compound | Phase on the higher temperature side relative to $S_C^*$ or $S_C$ phase | Tilt angle ($T-T_c=-20$ ℃) |
|---|---|---|---|
| $B_{30}$ | 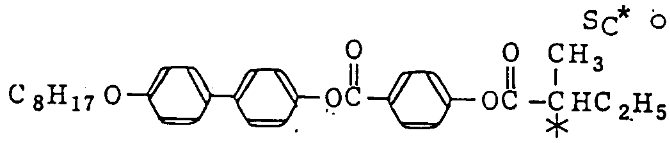 | Ch | 38° |
| $B_{31}$ | 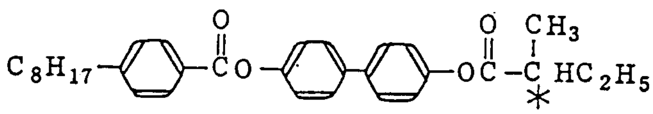 | Ch | 37° |
| $B_{32}$ | 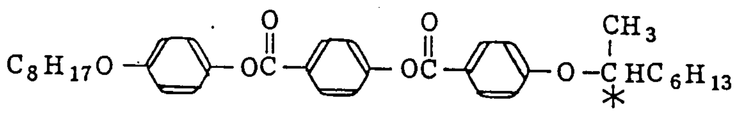 | Ch | 48° |
| $B_{33}$ | 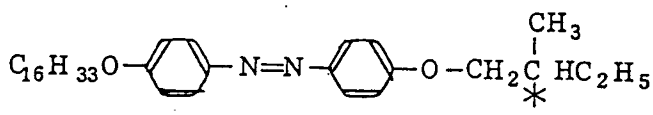 | I | |
| $B_{34}$ | 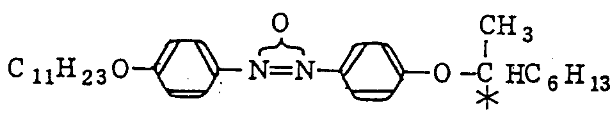 | Ch | 25° |
| $B_{35}$ | 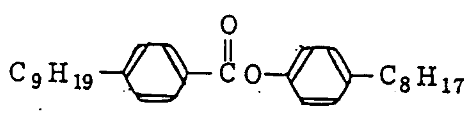 | N | |
| $B_{36}$ | 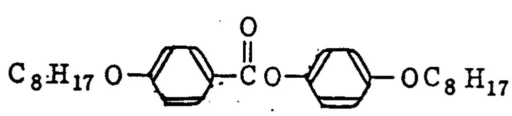 | N | |
| $B_{37}$ | 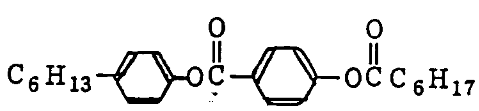 | N | |
| $B_{38}$ | 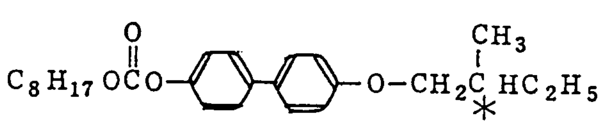 | Ch | |

Table 2 (-continued)

| No. | Compound | Phase on the higher temperature side relative to $S_C$* or $S_C$ phase | Tilt angle (T−Tc= −20℃) |
|---|---|---|---|
| $B_{39}$ | 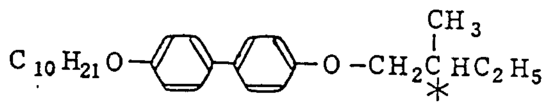 | I | |
| $B_{40}$ | 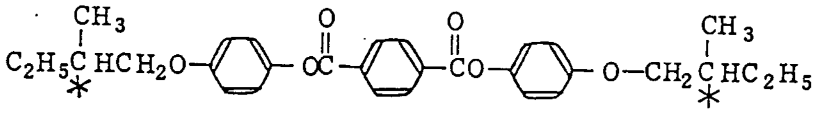 | Ch | |
| $B_{41}$ | 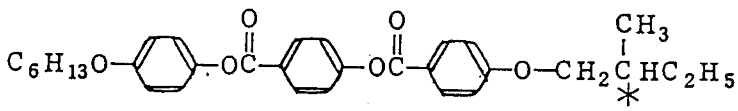 | Ch | |
| $B_{43}$ | 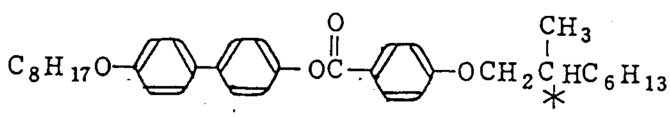 | Ch | |
| $B_{43}$ | 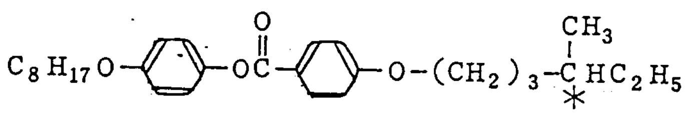 | Ch | |
| $B_{44}$ | 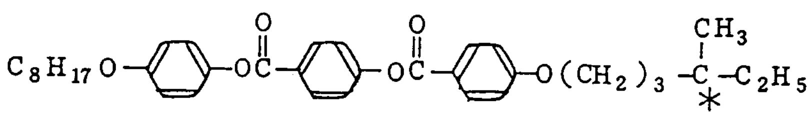 | Ch | |
| $B_{45}$ | 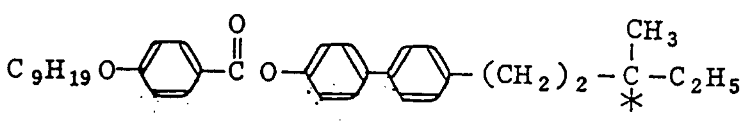 | Ch | |

Table 2 (-continued)

| No. | Compound | Phase on the higher temperature side relative to $S_C^*$ or $S_C$ phase | Tilt angle (T−Tc= −20℃) |
|---|---|---|---|
| $A_{11}$ | 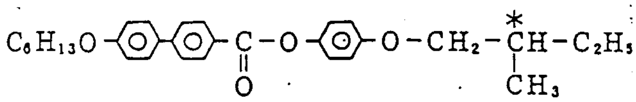 | $S_A$ | 19° |
| $A_{12}$ | 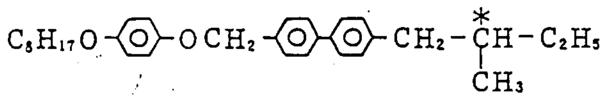 | $S_A$ | 22° |
| $A_{13}$ | 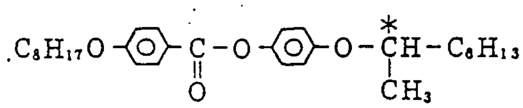 | $S_A$ | 22° |
| $A_{14}$ | 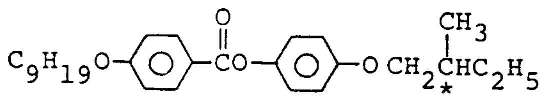 | $S_A$ | |
| $A_{15}$ | 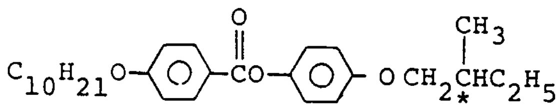 | $S_A$ | |
| $A_{16}$ | 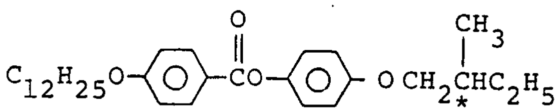 | $S_A$ | |
| $A_{17}$ | 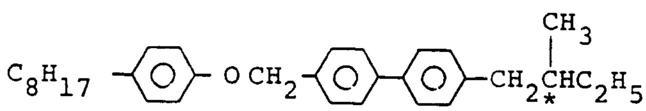 | $S_A$ | 17*) |
| $A_{18}$ | 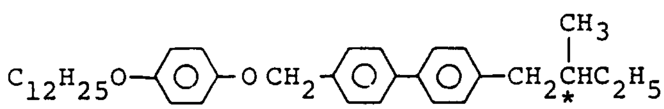 | $S_A$ | 22**) |
| $A_{19}$ | 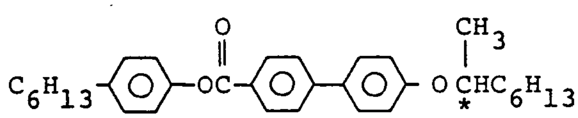 | $S_A$ | 30 |
| $A_{20}$ | 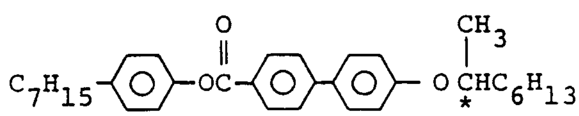 | $S_A$ | 28 |
| $A_{21}$ | 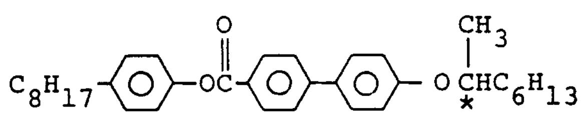 | $S_A$ | 28 |
| $A_{22}$ | 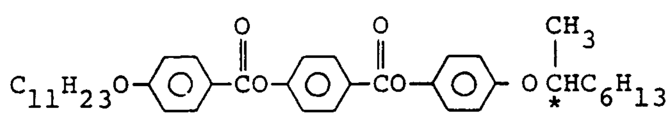 | $S_A$ | 25 |

*) $T-T_C = -5°C$ **) $T-T_C = -10°C$

Table 2 (-continued)

| No. | Compound | Phase on the higher temperature side relative to $S_C$* or $S_C$ phase | Tilt angle (T-Tc= -20°C) |
|---|---|---|---|
| $A_{23}$ | 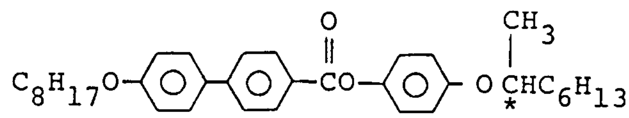 | $S_A$ | 19 |
| $A_{24}$ | 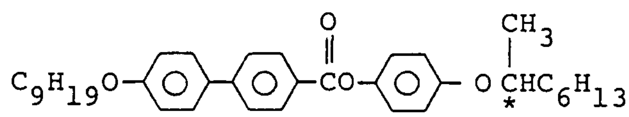 | $S_A$ | 28 |
| $A_{25}$ | 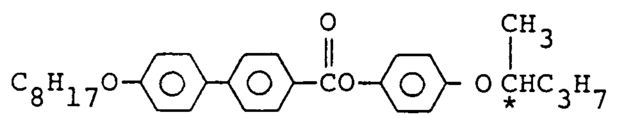 | $S_A$ | 23 |
| $A_{26}$ | 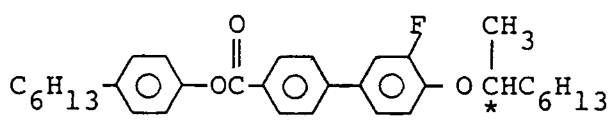 | $S_A$ | 27 |
| $A_{27}$ | 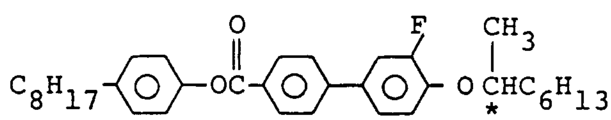 | $S_A$ | 25 |
| $A_{28}$ | 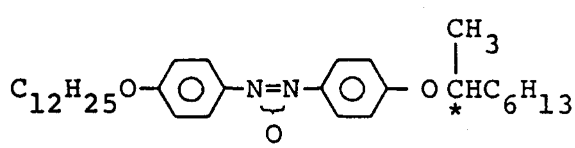 | $S_A$ | 22 |

Further, in the preparation of a ferroelectric smectic C liquid crystal mixture suitable to guest-host display mode, a chiral smectic liquid crystal compound exhibiting the above-mentioned phase series (iii) or (iv) may be used as its main component and if necessary, a compound exhibiting the phase series (i) or (ii) may be used in a small quantity so that the resulting composition has no $S_A$ phase on the higher temperature side relative to $S_C$* phase.

The foregoing refers to a case where liquid crystals having ferroelectric smectic C phase are used as components, but even when these components both exhibit no ferroelectric properties, if $S_C$ phase is present in place of $S_C$* phase, a chiral compound may be used as a second component to thereby enable the resulting liquid crystal mixture to exhibit a ferroelectric smectic C phase.

As shown in Table 1 and Table 2, the tilt angle of ferroelectric liquid crystal phases varies depending on the kinds of phases on the higher temperature side relative to $S_C$* phase, and there is a tendency that when $S_A$ phase is exhibited on the higher temperature side relative to $S_C$* phase, the tilt angle is small ($\theta < 30^\circ$), while when no $S_A$ phase is exhibited, the tilt angle is large ($\theta \geqq 30^\circ$). Next, the fact that this application also to liquid crystal mixtures having $S_C$* phase will be described referring to the accompanying drawings.

Fig. 1 shows a chart illustrating the concentration dependency of the tilt angle and that of the phase

transition point of a two-component mixture system consisting of a compound (A6) exhibiting $S_A$ phase on the higher temperature side relative to $S_C$* phase and having a small tilt angle and a compound (A11) similarly exhibiting $S_A$ phase on the higher temperature side relative to $S_C$* phase and a small tilt angle. In Fig. 1, as apparent from the phase diagram therein, $S_A$ phase is present over the total range of concentration, and the tilt angle linearly varies depending on the concentration, and is in the range of 19° to 23°.

On the other hand, Fig. 2 shows a chart illustrating the concentration dependency of the tilt angle and that of the phase transition point of a two-component mixture system consisting of a compound (A6) exhibiting $S_A$ phaseon the higher temperature side relative to $S_C$* phase and having a small tilt angle and a compound (B1) exhibiting no $S_A$ phase on the higher temperature side relative to $S_C$* phase and having a large tilt angle. As apparent from Fig. 2, $S_A$ phase is extinct at a concentration of compound (B1) of about 40% by mol, and along therewith, the tilt angle becomes about 30° and with the increase of the concentration of compound (B1), the angle exceeds 30°.

Fig. 3 illustrates the concentration dependency of the tilt angle and that of the phase transition point of a two-component mixture system consisting of a compound (A29) expressed by the formula

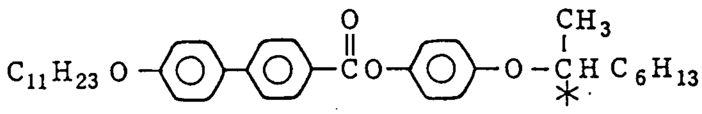

and exhibiting $S_A$ phase on the higher temperature side relative to $S_C$* phase and having a small tilt angle, and a compound (B12) expressed by the formula

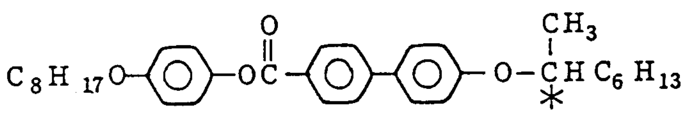

and exhibiting no $S_A$ phase on the higher temperature side relative to $S_C$* phase and having a large tilt angle.

As in the above example, $S_A$ phase is extinct at a concentration of compound (B12) (exhibiting no $S_A$ phase on the higher temperature side relative to $S_C$* phase) of about 80% by mol, and corresponding thereto, the tilt angle suddenly increases.

Fig. 4 illustrates the concentration dependency of the tilt angle and that of the phase transition point of a two-component mixture system consisting of the above-described compound (A6) exhibiting $S_A$ phase on the higher temperature side relative to $S_C$* phase and having a small tilt angle and the above-mentioned compound (B12) exhibiting no $S_A$ phase on the higher temperature side relative to $S_C$* phase and having a large tilt angle.

The same tendency as in the above- mentioned two examples is observed, that is, $S_A$ phase is extinct at a concentration of compound (B12) of about 60% by mol, and thereafter when the concentration exceeds the value, the tilt angle exceeds 30°.

As described above, the relationship between the tilt angle and the phase series applies also to mixtures, and as to the mixtures, there is a tendency that when $S_A$ phase is exhibited on the higher temperature side relative to $S_C$* phase, the tilt angle is small, while when no $S_A$ phase is exhibited on the higher temperature side relative to $S_C$* phase, the tilt angle exceeds 30°.

Namely it is seen that even when a compound having no $S_A$ phase on the higher temperature side relative to $S_C$* phase is used as a component, if the resulting mixture has $S_A$ phase on the higher temperature side relative to $S_C$* phase, the tilt angle in the $S_C$* phase becomes small. On the other hand, even when a compound exhibiting $S_A$ phase on the higher temperature side relative to $S_C$* phase and having a small tilt angle is used, if no $S_A$ phase is exhibited on the higher temperature side relative to $S_C$* phase in the form of a mixture, the tilt angle becomes large.

The above examples are directed to mixture systems consisting of a chiral smectic liquid crystal compound and another chiral smectic liquid crystal compound, but this applies also to a mixture system consisting of a chiral smectic liquid crystal compound and a smectic C liquid crystal compound having no asymmetric center. Namely, even when a smectic compound exhibiting no $S_A$ phase on the higher temperature side relative to $S_C$ phase is used, if no $S_A$ phase is exhibited on the higher temperature side relative to $S_C$* phase in the form of a composition, it is possible to obtain a ferroelectric liquid crystal

composition having a large tilt angle. This will be described referring to the following examples:

A two-component mixture consisting of a smectic C liquid crystal compound (B46) expressed by the formula

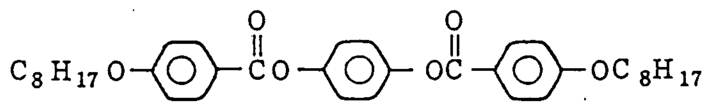

and exhibiting no $S_A$ phase on the higher temperature side relative to $S_C$ phase and the above-mentioned compound (B-12) i.e. a chiral smectic liquid crystal compound exhibiting no $S_A$ phase on the higher temperature side relative to $S_C$* phase and having a large tilt angle, the proportion of the former compound being 80% by weight and that of the latter being 20% by weight, exhibits $S_C$*phase in the temperature range of 50° to 115°C, exhibits $S_A$ phase on the higher temperature side relative to $S_C$* phase and forms an isotropic liquid at 182°C. This mixture exhibiting no $S_A$ phase on the higher temperature side relative to $S_C$* phase has a tilt angle as large as about 40° at $T\text{-}T_c$ = -20°C.

Further, a two-component mixture consisting of the above-mentioned compound (B46) and a chiral smectic liquid crystal compound (A30) expressed by the formula

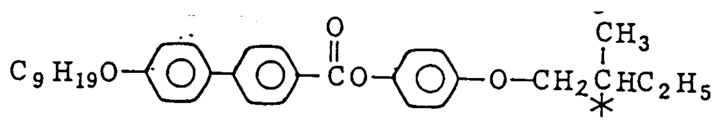

and exhibiting $S_A$ phase on the higher temperature side relative to $S_C$* phase and having a small tilt angle, the proportion of the former compound being 80% by weight and that of the latter being 20% by weight, exhibits $S_C$* phase in the temperature range of 70° to 125°C, exhibits Ch phase on the higher temperature side relative to $S_C$* phase and forms an isotropic liquid at 188°C. This mixture has a tilt angle as large as about 40° at $T\text{-}T_c$ = -20°C.

As apparent from the above examples, the tilt angle of the ferroelectric smectic C phase of the resulting liquid crystal mixture is greatly ruled by whether or not the mixture exhibits $S_A$ phase. In order to make the mixture have $S_A$ phase, this is effected by making the content of the component having $S_A$ phase predominant over that of the component having no $S_A$ phase. The component having $S_A$ phase, referred to herein, also includes, besides compounds having $S_C$* phase or $S_C$ phase together with $S_A$ phase, components having no such smectic C phase but having only $S_A$ phase, if any. A smectogenic component exhibiting no mesomorphic phase but having potential smectic A properties may also be included. The component having no $S_A$ phase, referred to herein, may also be cholesteric or nematic compound or a compound having no potential smectic A properties, besides the above-mentioned compound having $S_C$* phase or $S_C$ phase but having no $S_A$ phase.

However, taking into account the fact that the resulting mixture should have $S_C$* phase, these components are preferred to have $S_C$* phase or $S_C$ phase.

Further, even in the case where a component having $S_C$ phase is contained but a component having $S_C$* phase is not contained at all, $S_C$* phase may be developed by adding a chiral compound, in the present invention.

Most of the compounds shown in Table 2 are those prepared by the present inventors for the first time and disclosed in Japanese patent application laid-open gazettes. These gazettes and compounds disclosed therein will be illustrated below.

| Japanese patent application laid-open No. Sho | Compounds disclosed therein |
|---|---|
| 59-137446/1984 | A6, A7, A11, A14, A15, A16 |
| 59-219251/1984 | B2, B11, B24, B38 |
| 61-63633/1986 | A12, A17, A18, B9, B16 - B20, B23, B26 - B28 |
| 61-43/1986 | A19 - A21, B12, B13, B21, B22 |
| 60-51147/1985 | B3, B25, B29 - B31 |
| 60-13729/1985 | B39 |
| 59-231043/1984 | B45 |
| 61-22051/1986 | A23 - A25 |
| 61-210056/1986 | A26, A27, B4 - B8, B15 |
| 61-183256/1986 | A28, B34 |

Compound B32 may be prepared using optically active 1-methylheptanol as its raw material, for example according to scheme 1 mentioned below. Compounds A 22, B41 and B44 may also be similarly prepared. Optically active carbonic esters used in Example 8 described later may be prepared according to the route of scheme 2.

Other compounds listed in Table 2 and chiral compounds mentioned in Examples described later may be prepared using optically active 2-methylbutanol, 1-methylheptanol, etc., for example according to combinations of the reactions disclosed in the above-mentioned gazettes and known reactions.

Scheme 1

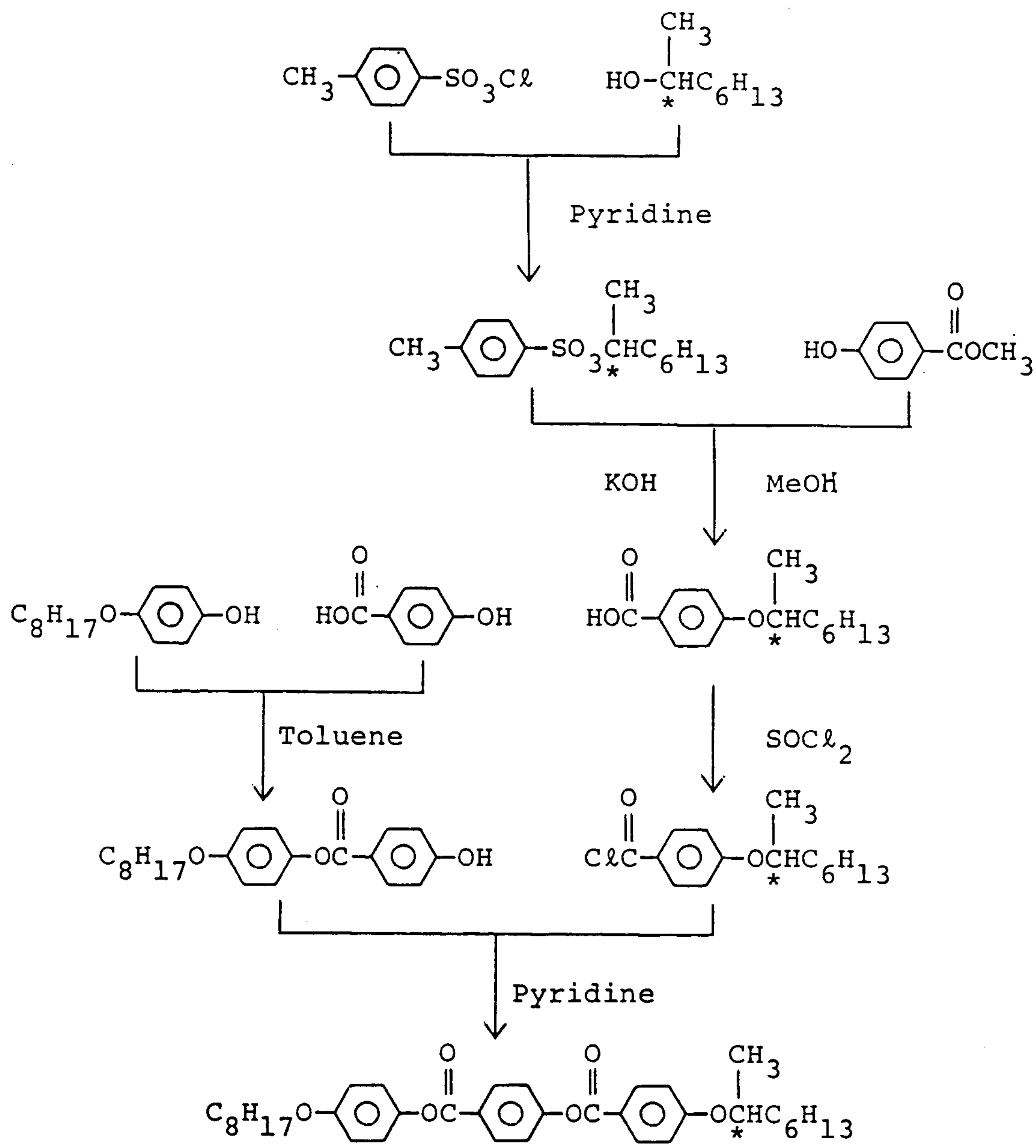

Scheme 2

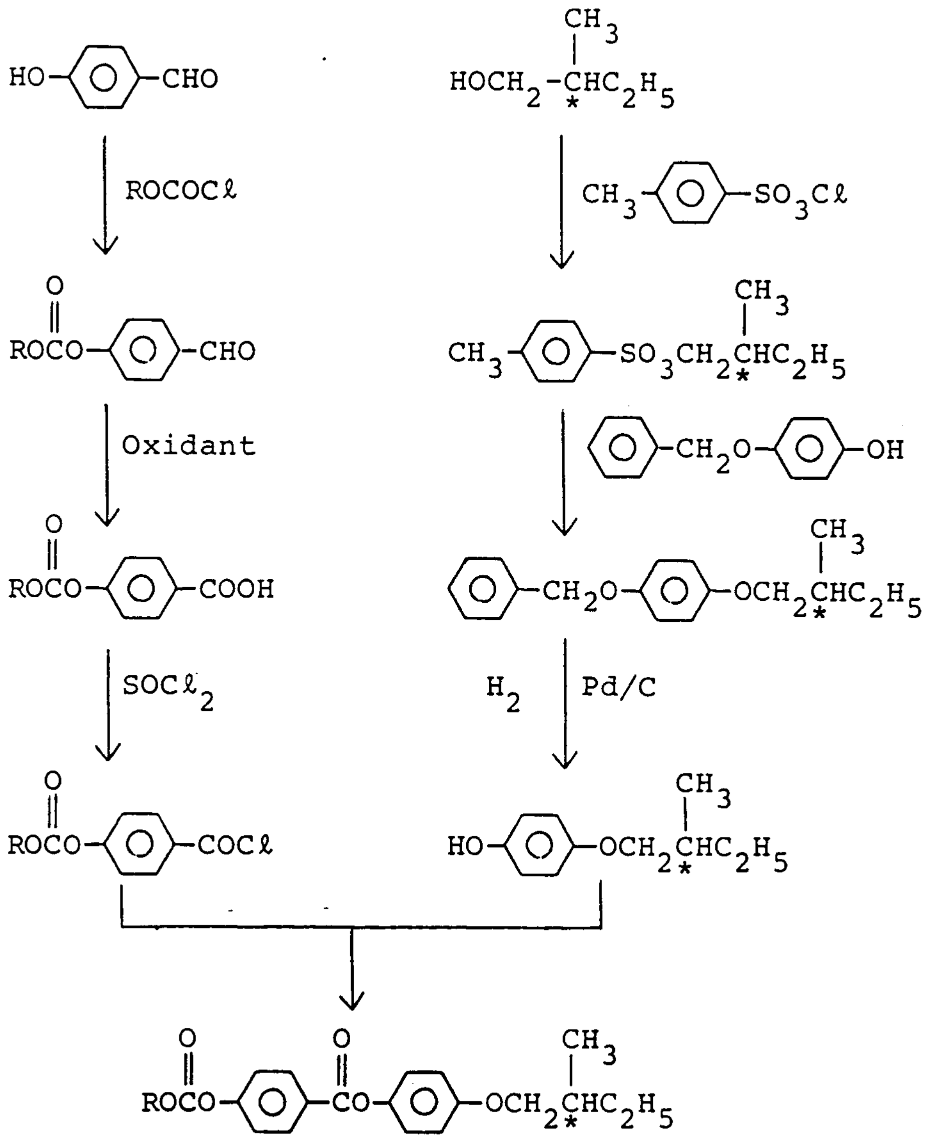


R = alkyl

The present invention will be described in more detail by way of Examples directed mainly to ferroelectric smectic C mixtures.

In Examples, the value of spontaneous polarization (Ps) was measured according to Sawyer-Tower method, the helical pitch (P) was sought by directly measuring the distance between stripe patterns (dechiralization lines) corresponding to the helical pitch, by the use of a cell of about 200 $\mu$m thick subjected to homogenous alignment; and the tilt angle ($\theta$) was sought from the angle corresponding to $2\theta$ made between an extinction position formed when an electric field as sufficiently high as the critical electric field or higher was applied to a cell subjected to homogenous alignment under crossed nicols, and another extinction position formed when the applied polarity was reversed therefrom. The compositions were

prepared by weighing the respective liquid crystals each in a definite weight and mixing these while heating and dissolving them in a sample bottle.

Example 1

A chiral smectic liquid crystal composition consisting of the following chiral smectic C liquid crystal compounds exhibiting $S_A$ phase on the higher temperature side relative to $S_C$* phase:

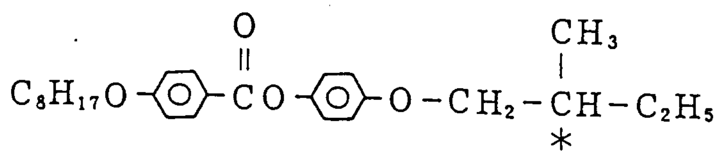
(A6)

20 wt.%

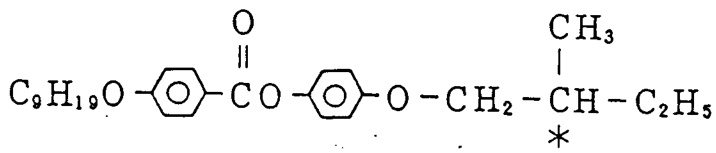
(A14)

20 wt.%

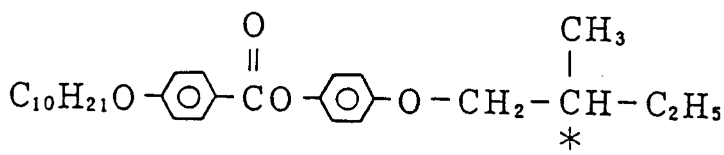
(A15)

20 wt.%

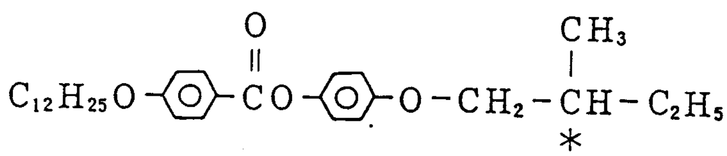
(A16)

20 wt.%

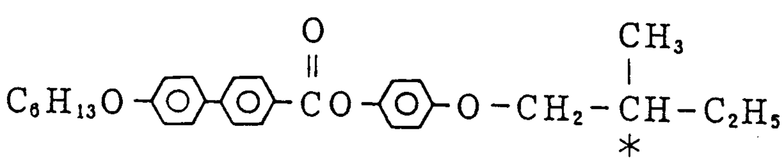
(A11), and

10 wt.%

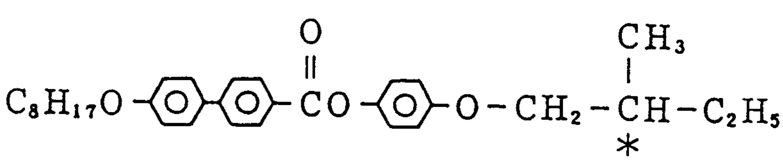
(A7)

10 wt.%

exhibits $S_C$* phase in the temperature range of 25° to 51°C, exhibits $S_A$ phase on the higher temperature side relative to $S_C$* phase and forms an isotropic liquid at 75°C. The value of the spontaneous polarization, the helical pitch and the tilt angle of this liquid crystal composition are 2.3 nC/cm$^2$, 5 µm and 21° at 30°C, respectively. Thus a ferroelectric chiral smectic liquid crystal composition very suitable to birefringence display mode was obtained.

Example 2

A chiral smectic liquid crystal composition consisting of the following chiral smectic C liquid crystal compounds having $S_A$ phase on the higher temperature side relative to $S_C$* phase:

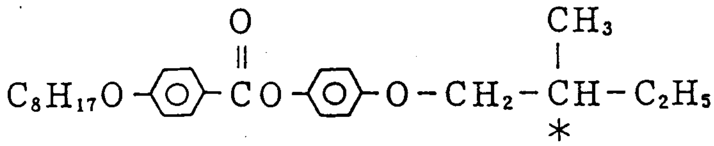

(A6)

3 0 wt.%

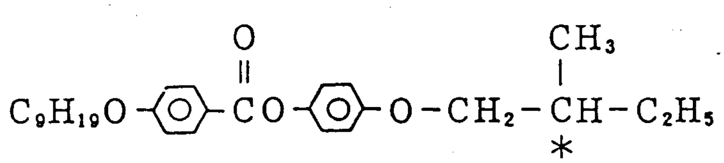

(A14)

2 0 wt.%

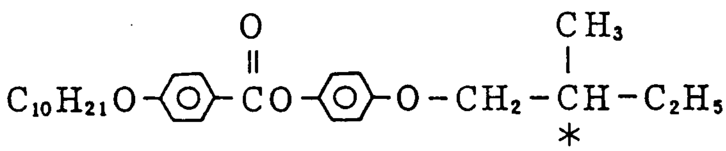

(A15)

2 0 wt.% and

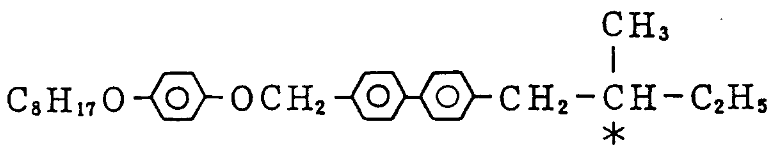

(A17)

1 0 wt.% ,

a chiral smectic liquid crystal C compound expressed by the following formula and exhibiting no $S_A$ phase on the higher temperature side relative to $S_C$* phase

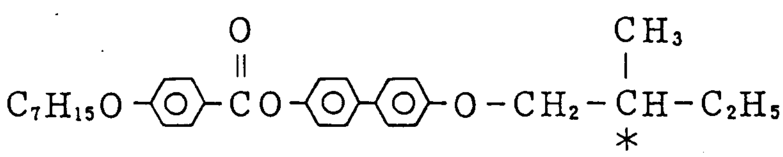

(B2)

1 0 wt.% ,

and a nematic liquid crystal compound expressed by the formula

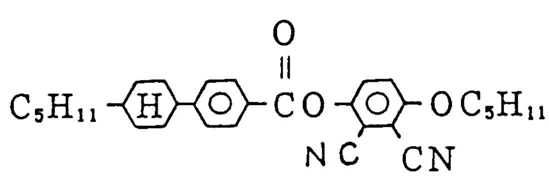

1 0 wt.%

exhibits $S_C$* phase in the temperature range of 0° to 63°C, exhibits $S_A$ phase on the higher temperature side relative to $S_C$* phase, forms a cholesteric phase at 71°C and forms an isotropic liquid at 78°C. The value of the spontaneous polarization, the helical pitch and the tilt angle of this liquid crystal composition were 3.8 nC/cm$^2$, 5 µm and 24° at 25°C, respectively. Thus a ferroelectric chiral smectic liquid crystal composition suitable to birefringence display mode was obtained.

Example 3

A chiral smectic liquid crystal composition consisting of the following chiral smectic C liquid crystal compounds exhibiting $S_A$ phase on the higher temperature side relative to $S_C$* phase:

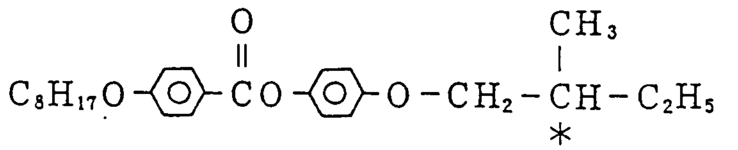 (A6)

20 wt.%

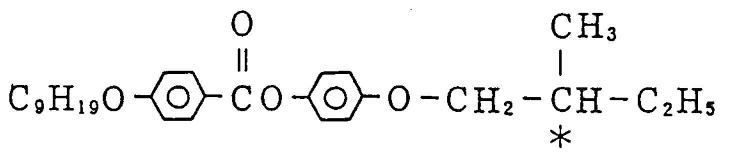 (A14)

20 wt.%

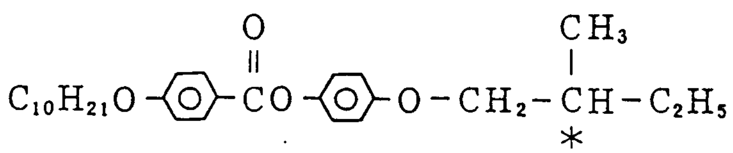 (A15) and

15 wt.%

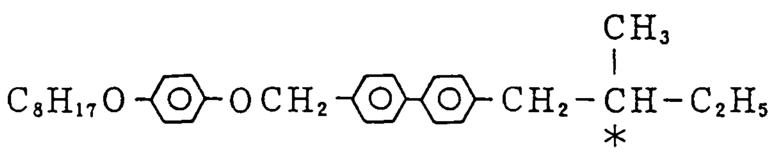 (A17) ;

10 wt.%

a chiral smectic liquid crystal compound expressed by the following formula and exhibiting $S_A$ phase on the higher temperature side relative to $S_C$* phase

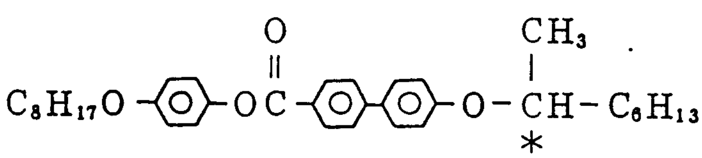 (A21)

20 wt.% ;

and a nematic liquid crystal compound expressed by the formula

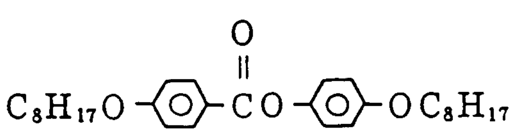

15 wt.%

exhibits $S_C$* phase in the temperature range of 11° to 64° C, exhibits $S_A$ phase on the higher temperature side relative to $S_C$* phase, forms Ch phase at 73° C and forms an isotropic liquid phase at 80° C. The value of the spontaneous polarization, the helical pitch and the tilt angle of this liquid crystal composition are 16.5

nC/cm$^2$, 8 $\mu$m and 25° at 25°C, respectively. Thus, a ferroelectric chiral smectic liquid crystal composition very suitable to birefringence display mode was obtained.

Example 4

A chiral smectic liquid crystal composition consisting of the following chiral smectic C liquid crystal compounds each having $S_A$ phase:

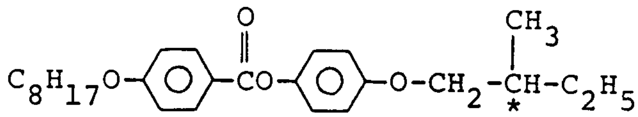

(A6)

20 wt.%

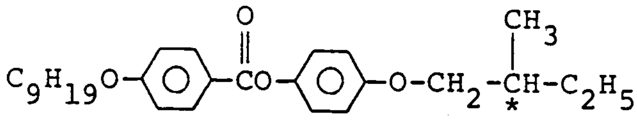

(A14)

20 wt.%

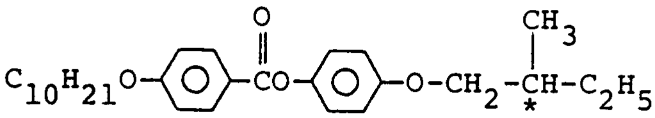

(A15)

20 wt.%

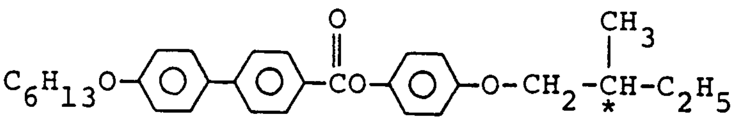

(A11)

10 wt.% and

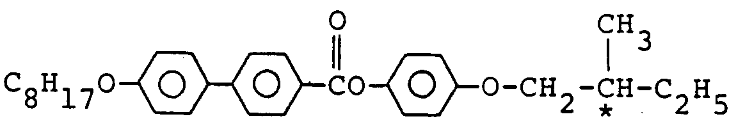

(A7)

10 wt.% ;

a chiral liquid crystal compound expressed by the formula

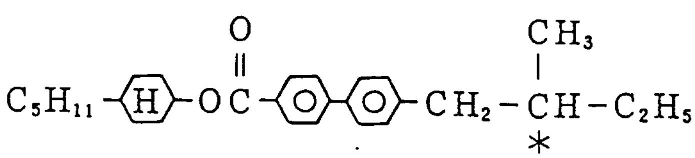

;

10 wt.%

and a nematic liquid crystal compound expressed by the formula

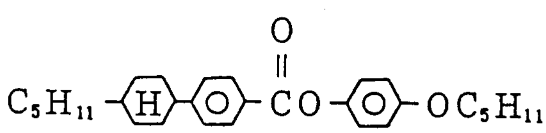

10 wt.%

exhibits $S_C$* phase in the temperature range of 0° to 45°C, exhibits $S_A$ phase on the higher temperature

side relative to $S_C$* phase, forms Ch phase at 87° C and forms an isotropic liquid at 94° C. The value of the spontaneous polarization, the helical pitch and the tilt angle of this liquid crystal composition are 2.8 nC/cm$^2$, 8 μm and 16° at 25° C, respectively. Thus a ferroelectric chiral smectic liquid crystal composition suitable to birefringence display mode was obtained.

Example 5

A chiral smectic liquid crystal composition consisting of the following chiral smectic C liquid crystal compounds:

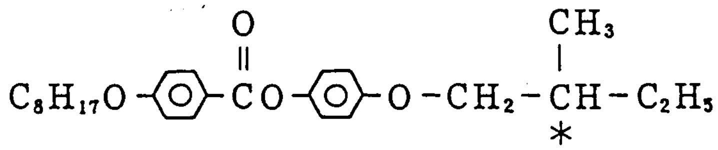 (A6)

35 wt.% and

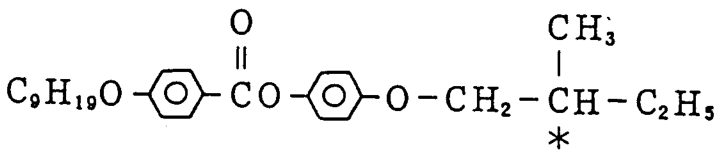 (A14)

25 wt.% ;

the following chiral smectic C liquid crystal compounds exhibiting no $S_A$ phase on the higher temperature side relative to $S_C$* phase:

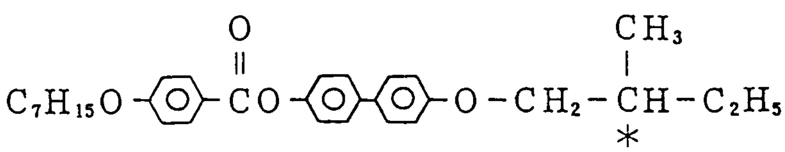 (B2)

10 wt.% and

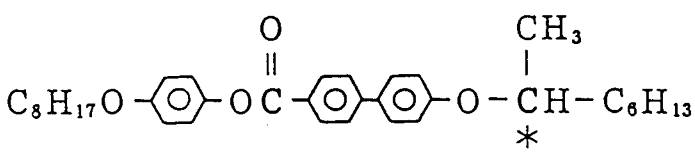 (B1)

20 wt.% ;

and a nematic liquid crystal compound expressed by the formula

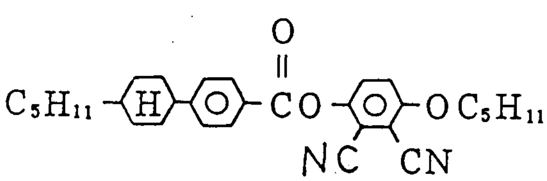

10 wt.%

exhibits $S_C$* phase in the temperature range of 0° to 66° C, exhibits $S_A$ phase on the higher temperature side relative to $S_C$* phase, forms Ch phase at 70° C and forms an isotropic liquid at 85° C. The value of the spontaneous polarization, the helical pitch and the tilt angle of this liquid crystal composition are 18 nC/cm$^2$; 3 μm and 24°, respectively. Thus a ferroelectric chiral smectic liquid crystal composition very suitable to birefringence display mode was obtained.

Example 6

A chiral smectic liquid crystal composition consisting of

a chiral smectic C liquid crystal compound expressed by the following formula and exhibiting no $S_A$ phase on the higher temperature side relative to $S_C$* phase:

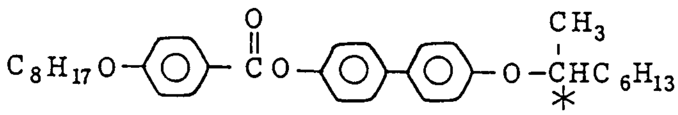 30 wt.% (B11),

the following smectic C liquid crystal compounds exhibiting no $S_A$ phase on the higher temperature side relative to $S_C$ phase:

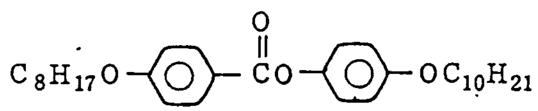 30 wt.%

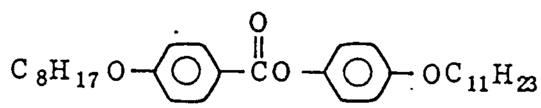 20 wt.% and

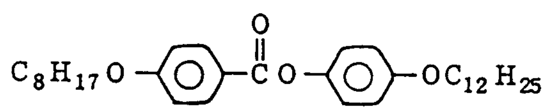 20 wt.%

exhibits $S_C$* phase in the temperature range of 28° to 82°C, forms Ch phase on the higher temperature side relative to $S_C$* phase and forms an isotropic liquid at 96°C. The value of the spontaneous polarization, the helical pitch and the tilt angle of this liquid crystal composition are 20 nC/cm$^2$, 4 µm and 38° at 30°C, respectively. Thus a ferroelectric chiral smectic liquid crystal composition having a very large tilt angle and very suitable to guest-host display mode was obtained.

Example 7

A chiral smectic liquid crystal composition consisting of

a chiral smectic C liquid crystal compound expressed by the following formula and exhibiting $S_A$ phase on the higher temperature side relative to $S_C$* phase:

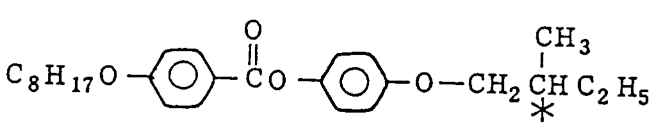 25 wt.% (A6)

and

a chiral smectic C liquid crystal compound expressed by the following formula and exhibiting no $S_A$ phase on the higher temperature side relative to $S_C$* phase:

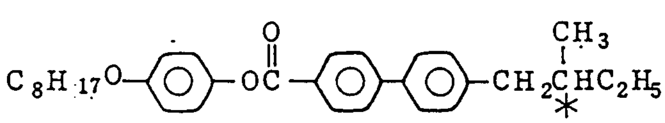 75 wt.% (B12)

exhibits $S_C$* phase in the temperature range of 25° to 75°C, forms Ch phase on the higher temperature side relative to $S_C$* phase, and forms an isotropic liquid at 130°C.

The value of the spontaneous polarization, the helical pitch and the tilt angle of this liquid crystal

composition are 2 $nC/cm^2$, 3 $\mu m$ and 34° at 30°C, respectively. Thus a ferroelectric chiral smectic liquid crystal composition very suitable to guest-host display mode was obtained.

Example 8

A chiral smectic liquid crystal composition consisting of

the following chiral smectic C liquid crystal compounds exhibiting no $S_A$ phase on the higher temperature side relative to $S_C$* phase:

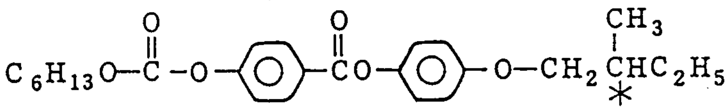

10 wt.%

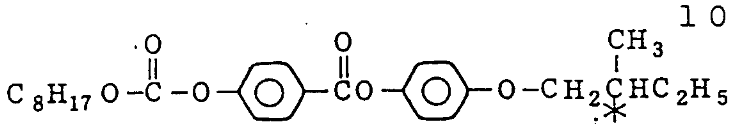

20 wt.%

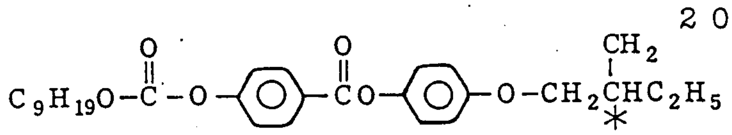

and

20 wt.%

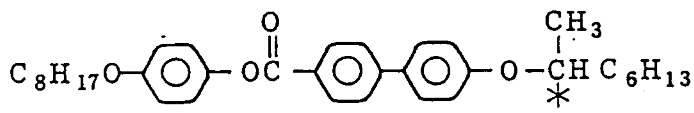

B12 ;

20 wt.%

chiral smectic C liquid crystal compounds expressed by the following formulas and exhibiting $S_A$ phase on the higher temperature side relative to $S_C$* phase:

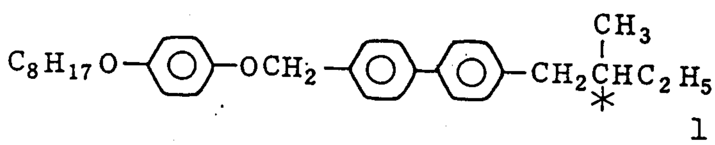

(A12)

10 wt.%

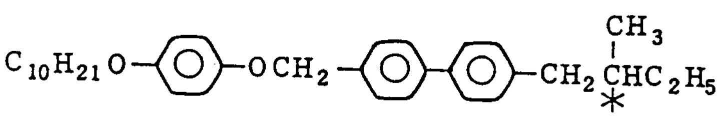

;

10 wt.%

and

a nematic liquid crystal compound expressed by the formula

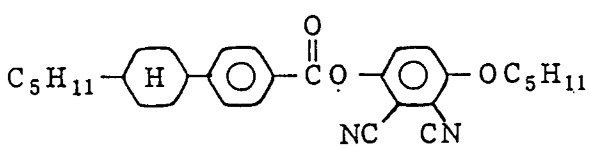

10 wt.%

exhibits $S_C$* phase in the temperature range of 0° to 66°C, forms Ch phase on the higher temperature side relative to $S_C$* phase and forms an isotropic liquid at 82°C. The value of the spontaneous polarization, the helical pitch and the tilt angle of this liquid crystal composition are 12 $nC/cm^2$, 8 $\mu m$ and 39° at 25°C,

respectively. Thus a ferroelectric chiral smectic liquid crystal composition very suitable to guest-host display mode was obtained.

Example 9

The ferroelectric chiral smectic C liquid crystal composition of Example 1 was filled in a cell provided with transparent electrodes subjected to a parallel aligning treatment by applying PVA onto their surface and rubbing the resulting surface, and having a cell thickness of 3 μm. The resulting liquid crystal cell was placed between two sheets of polarizers arranged in a crossed nicol state, followed by impressing an alternating current of a low frequency of 0.5 Hz and 15 V. As a result, a clear switching operation was observed and a liquid crystal element having a very good contrast value (1 : 10) and a very short response time (2 m sec at 30 °C) was obtained.

Example 10

The ferroelectric chiral smectic liquid crystal composition of Example 3 having a very large spontaneous polarization was filled in a cell subjected to the same treatment as in Example 9 and having a cell thickness of 2 μm. The resulting liquid cell was placed between two sheets of polarizers arranged in a crossed nicol state, followed by impressing an alternating current of a low frequency of 0.5 Hz and 15 V. As a result, a clear switching operation was observed and a liquid crystal element having a very good contrast value (1 : 20) and a very short response time (0.6 m sec at 25 °C) was obtained.

Example 11

To the ferroelectric chiral smectic liquid crystal composition prepared in Example 8 was added 3% by weight of an anthraquinone dyestuff (D-16, tradename of product made by BDH Company) as a dichroic dyestuff, to prepare a composition for the so-called guest-host display. This composition was filled in a cell provided with transparent electrodes subjected to a parallel aligning treatment by applying PVA as an aligning agent onto their surface and rubbing the resulting surface, and having a cell thickness of 8 μm. A sheet of polarizer was provided so that its polarizing plane might be parallel to the molecular axis, followed by impressing an alternating current of a low frequency of 0.5Hz and 30V. As a result, a clear switching phenomenon having a very good contrast was observed. The response time at that time was sought from change in the intensity of transmitted light. Thus a guest-host display element having a response time as very short as about 2 m sec at 25 °C was obtained.

## Claims

**1.** In the preparation of a ferroelectric smectic C mixture having at least two components at least one of which is a liquid crystal compound having smectic A phase and ferroelectric smectic C phase or at least two components comprising a liquid crystal compound having smectic C phase and smectic A phase and a chiral compound,

a method for controlling the tilt angle of said ferroelectric smectic C mixture, which method comprises having said components having smectic A phase contained in said ferroelectric liquid crystal mixture in excess of the quantity of at least one compound having no smectic A phase contained in said at least two components, so that said ferroelectric smectic C mixture exhibits smectic A phase, to thereby be able to adjust the tilt angle of said ferroelectric smectic C phase to a definite value in the range of 16° to 29°.

**2.** In the preparation of a ferroelectric smectic C mixture having at least two components at least one of which is a liquid crystal compound having ferroelectric smectic C phase and having no smectic A phase or at least two components comprising a liquid crystal compound having smectic C phase and having no smectic A phase and a chiral compound,

a method for controlling the tilt angle of said ferroelectric smectic C mixture, which method comprises having at least one component having no smectic A phase contained in said ferroelectric liquid crystal mixture in excess of the quantity of said components having smectic A phase contained in said at least wo components, so that said ferroelectric smectic C mixture exhibits no smectic A phase, to thereby be able to adjust the tilt angle of said ferroelectric smectic C phase to a definite value in the range of 32° to 58°.

3. A method of preparing a ferroelectric smectic C mixture, in which at least two components are mixed, at least one of which is a liquid crystal compound having smectic A phase and ferroelectric smectic C phase or in which at least two components are mixed comprising a liquid crystal compound having smectic C phase and smectic A phase and a chiral compound, and
   the tilt angle of said ferroelectric smectic C mixture is controlled by the method of claim 1 to thereby produce a ferroelectric smectic C mixture having a ferroelectric smectic C phase with a tilt angle in the range of 16° to 29°.

4. A method of preparing a ferroelectric smectic C mixture in which at least two components are mixed, at least one of which is a liquid crystal compound having ferroelectric smectic C phase and having no smectic A phase or in which at least two components are mixed comprising a liquid crystal compound having smectic C phase and having no smectic A phase and a chiral compound, and
   the tilt angle of said ferroelectric smectic C mixture is controlled by the method of claim 2 to thereby produce a ferroelectric smectic C mixture having a ferroelectric smectic C phase with a tilt angle in the range of 32° to 58°.

5. A method according to claim 3 followed by the step of incorporating the ferroelectric liquid crystal mixture in a light switching element.

6. A method according to claim 4 followed by the step of incorporating the ferroelectric liquid crystal mixture in a light switching element.

7. A method of manufacturing a light switching element in which ferroelectric liquid crystal smectic C mixture produced according to claim 3 or 4 is incorporated as an active light switching region.

**Revendications**

1. Dans la préparation d'un mélange smectique C ferroélectrique ayant au moins deux constituants dont l'un au moins est un composé à cristaux liquides ayant une phase smectique A et une phase smectique C ferroélectrique, ou au moins deux constituants comprenant une phase smectique C et une phase smectique A et un composé optiquement actif,
   - un procédé pour régler l'angle d'inclinaison de ce mélange smectique C ferroélectrique, lequel procédé comprend le fait d'avoir ces constituants ayant une phase smectique A contenu dans ce mélange de cristaux liquides ferroélectriques en excès par rapport à la quantité d'au moins un composé n'ayant pas de phase smectique A contenue dans ces deux constituants ou davantage, de telle sorte que ce mélange smectique C ferroélectrique présente une phase smectique A, pour pouvoir ainsi ajuster l'angle d'inclinaison de cette phase smectique C ferroélectrique à une valeur définie dans l'intervalle de 16 à 29°.

2. Dans la préparation d'un mélange smectique C ferroélectrique ayant au moins deux constituants dont l'un au moins est un composé à cristaux liquides ayant une phase smectique C ferroélectrique, et n'ayant pas de phase smectique A ou au moins deux constituant comprenant un composé à cristaux liquides ayant une phase smectique C et n'ayant pas de phase smectique A et un composé optiquement actif,
   - un procédé pour régler l'angle d'inclinaison de ce mélange smectique C ferroélectrique, lequel procédé comprend le fait d'avoir au moins un constituant n'ayant pas de phase smectique A contenu dans ce mélange de cristaux liquides ferroélectriques en excès par rapport à la quantité de ces constituant ayant une phase smectique A contenue dans ces deux constituants ou davantage, de telle sorte que ce mélange smectique C ferroélectrique ne présente pas de phase smectique A, pour pouvoir ainsi ajuster l'angle d'inclinaison de cette phase smectique C ferroélectrique à une valeur définie dans l'intervalle de 32 à 58°.

3. Procédé de préparation d'un mélange smectique C ferroélectrique dans lequel au moins deux constituants sont mélangés, dont l'un au moins est un composé à cristaux liquides ayant une phase smectique A et une phase smectique C ferroélectrique ou dans lequel au moins deux constituant sont mélangés, comprenant un composé à cristaux liquides ayant une phase smectique C et une phase smectique A et un composé optiquement actif, et
   - l'angle d'inclinaison de ce mélange smectique C ferroélectrique est réglé par le procédé de la

revendication 1 pour produire ainsi un mélange smectique C ferroélectrique ayant une phase smectique C ferroélectrique dont l'angle d'inclinaison est dans l'intervalle de 16 à 29°.

**4.** Procédé de préparation d'un mélange smectique C ferroélectrique dans lequel sont mélangés au moins deux constituants, dont l'un au moins est un composé à cristaux liquides ayant une phase smectique C ferroélectrique et n'ayant pas de phase smectique A ou dans lequelsont mélangés au moins deux constituant comprenant un composé à cristaux liquides ayant une phase smectique C et n'ayant pas de phase smectique A et un composé optiquement actif, et
   - l'angle d'inclinaison de ce mélange smectique C ferroélectrique est réglé par le procédé de la revendication 2, pour produire ainsi un mélange smectique C ferroélectrique ayant une phase smectique C ferroélectrique dont l'angle d'inclinaison est dans l'intervalle de 32 à 58°.

**5.** Procédé selon la revendication 3, suivi de l'étape d'incorporation du mélange de cristaux liquides ferroélectriques dans un élément de commutation de la lumière.

**6.** Procédé selon la revendication 4, suivi de l'étape d'incorporation du mélange de cristaux liquides ferroélectriques dans un élément de commutation de la lumière.

**7.** Procédé de fabrication d'un élément de commutation de la lumière dans lequel le mélange smectique C de cristaux liquides ferroélectriques préparé selon les revendications 3 ou 4 est incorporé comme région active de commutation de lumière.

**Patentansprüche**

**1.** Verfahren zum Kontrollieren des Kippwinkels einer ferroelektrischen smektischen C-Mischung, die zumindest zwei Komponenten aufweist, von denen zumindest eine eine Flüssigkristallverbindung ist, die eine smektische A-Phase und eine ferroelektrische, smektische C-Phase aufweist, oder die zumindest zwei Komponenten aufweist, umfassend eine Flüssigkristallverbindung mit einer smektischen C-Phase und einer smektischen A-Phase und eine chirale Verbindung, dadurch **gekennzeichnet,** dass die Komponenten, die die smektische A-Phase aufweisen, die in der ferroelektrischen Flüssigkristallmischung enthalten sind, in einem Überschuss zu der Menge von zumindest einer Verbindung enthalten sind, die keine smektische A-Phase aufweist, die in den wenigstens zwei Komponenten enthalten ist, so dass die ferroelektrische, smektische C-Mischung eine smektische A-Phase entfaltet, um dadurch den Kippwinkel der ferroelektrischen, smektischen C-Phase auf einen bestimmten Wert in dem Bereich von 16 bis 29° einstellen zu können.

**2.** Verfahren zum Kontrollieren des Kippwinkels einer ferroelektrischen, smektischen C-Mischung, die zumindest zwei Komponenten aufweist, von denen zumindest eine eine Flüssigkristallverbindung ist, die eine ferroelektrische, smektische C-Phase und keine smektische A-Phase aufweist, oder die zumindest zwei Komponenten aufweist, umfassend eine Flüssigkristallverbindung mit einer smektischen C-Phase und ohne smektische A-Phase und eine chirale Verbindung, dadurch **gekennzeichnet,** dass zumindest eine Komponente, die keine smektische A-Phase aufweist, in der ferroelektrischen Flüssigkristallmischung in einem Überschuss in bezug auf die Menge der Komponenten enthalten ist, die eine smektische A-Phase aufweisen, die in den zumindest zwei Komponenten enthalten sind, so dass die ferroelektrische, smektische C-Mischung keine smektische A-Phase entfaltet, um dadurch den Kippwinkel der ferroelektrischen, smektischen C-Phase auf einen bestimmten Wert in dem Bereich von 32 bis 58° einzustellen.

**3.** Verfahren zur Herstellung einer ferroelektrischen, smektischen C-Mischung, bei dem zumindest zwei Komponenten vermischt werden, von denen zumindest eine eine Flüssigkristallverbindung ist, die eine smektische A-Phase und eine ferroelektrische, smektische C-Phase aufweist, oder bei dem zumindest zwei Komponenten vermischt werden, die eine Flüssigkristallverbindung mit einer smektischen C-Phase und einer smektischen A-Phase und eine chirale Verbindung enthalten, und wobei der Kippwinkel der ferroelektrischen smektischen C-Mischung durch das Verfahren gemäss Anspruch 1 kontrolliert wird, um dadurch eine ferroelektrische, smektische C-Mischung mit einer ferroelektrischen, smektischen C-Phase mit einem Kippwinkel in dem Bereich von 16 bis 29° zu erzeugen.

**4.** Verfahren zur Herstellung einer ferroelektrischen, smektischen C-Mischung, bei dem zumindest zwei

Komponenten vermischt werden, von denen zumindest eine eine Flüssigkristallverbindung ist, die eine ferroelektrische, smektische C-Phase und keine smektische A-Phase aufweist, oder bei dem zumindest zwei Komponenten vermischt werden, die eine Flüssigkristallverbindung mit smektischer C-Phase und ohne smektische A-Phase und eine chirale Verbindung umfassen, und wobei der Kippwinkel der ferroelektrischen, smektischen C-Mischung durch das Verfahren gemäss Anspruch 2 kontrolliert wird, um dadurch eine ferroelektrische, smektische C-Mischung mit einer ferroelektrischen, smektischen C-Phase mit einem Kippwinkel in dem Bereich von 32 bis 58° zu erzeugen.

**5.** Verfahren nach Anspruch 3, dadurch **gekennzeichnet,** dass der Schritt folgt, dass die ferroelektrische Flüssigkristallmischung in ein Lichtschalterelement eingefügt wird.

**6.** Verfahren nach Anspruch 4, dadurch **gekennzeichnet,** dass der Schritt folgt, dass die ferroelektrische Flüssigkristallmischung in ein Lichtschalterelement eingefügt wird.

**7.** Verfahren zur Herstellung eines Lichtschalterelementes, dadurch **gekennzeichnet,** dass die ferroelektrische, flüssigkristalline, smektische C-Mischung, die nach Anspruch 3 oder 4 hergestellt ist, als ein aktiver Lichtschaltbereich eingefügt wird.

FIG. 1

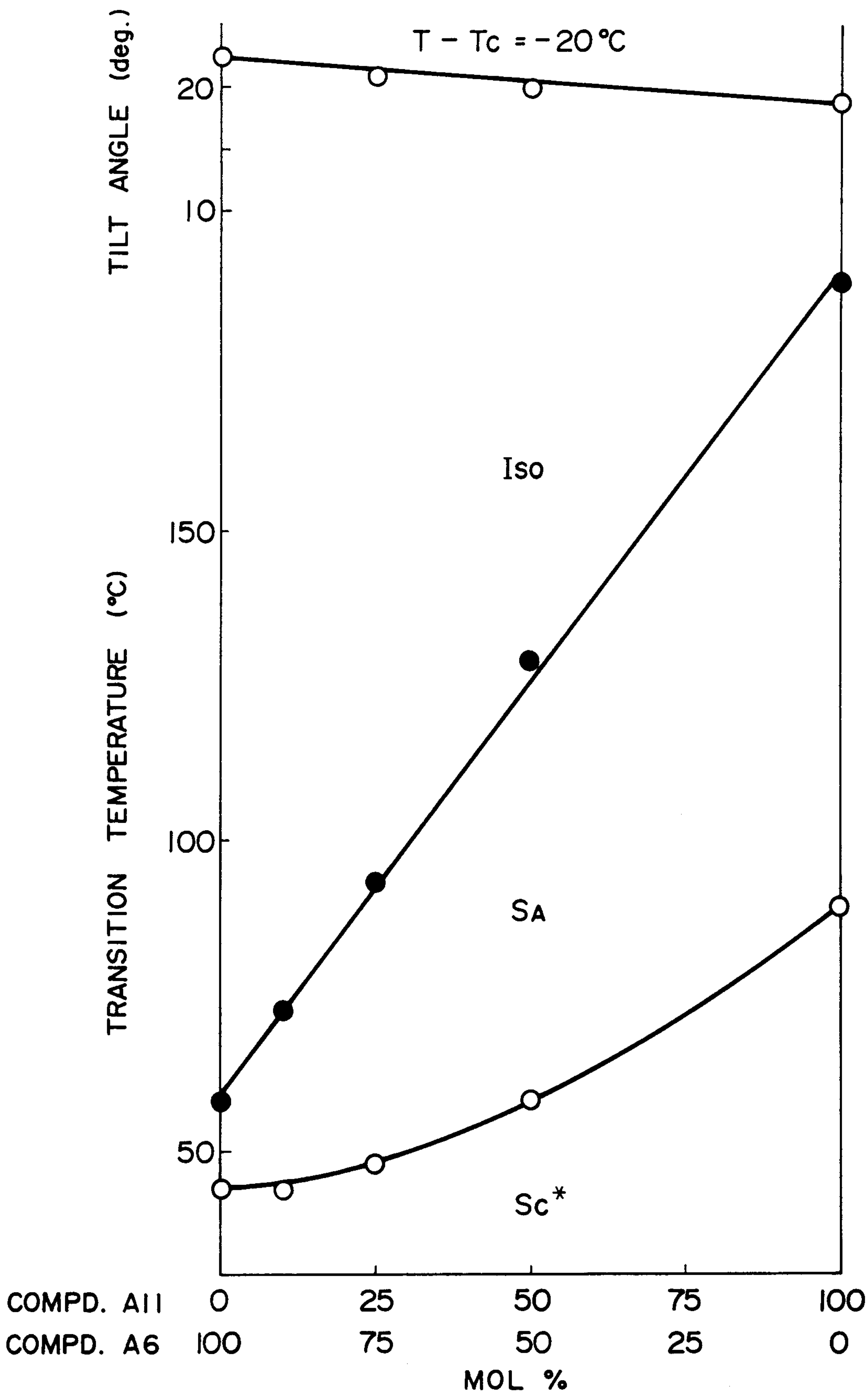
TILT ANGLE (deg.)
T - Tc = -20°C
20
10
TRANSITION TEMPERATURE (°C)
150
100
50
Iso
SA
Sc*
COMPD. A11 0 25 50 75 100
COMPD. A6 100 75 50 25 0
MOL %

FIG. 2

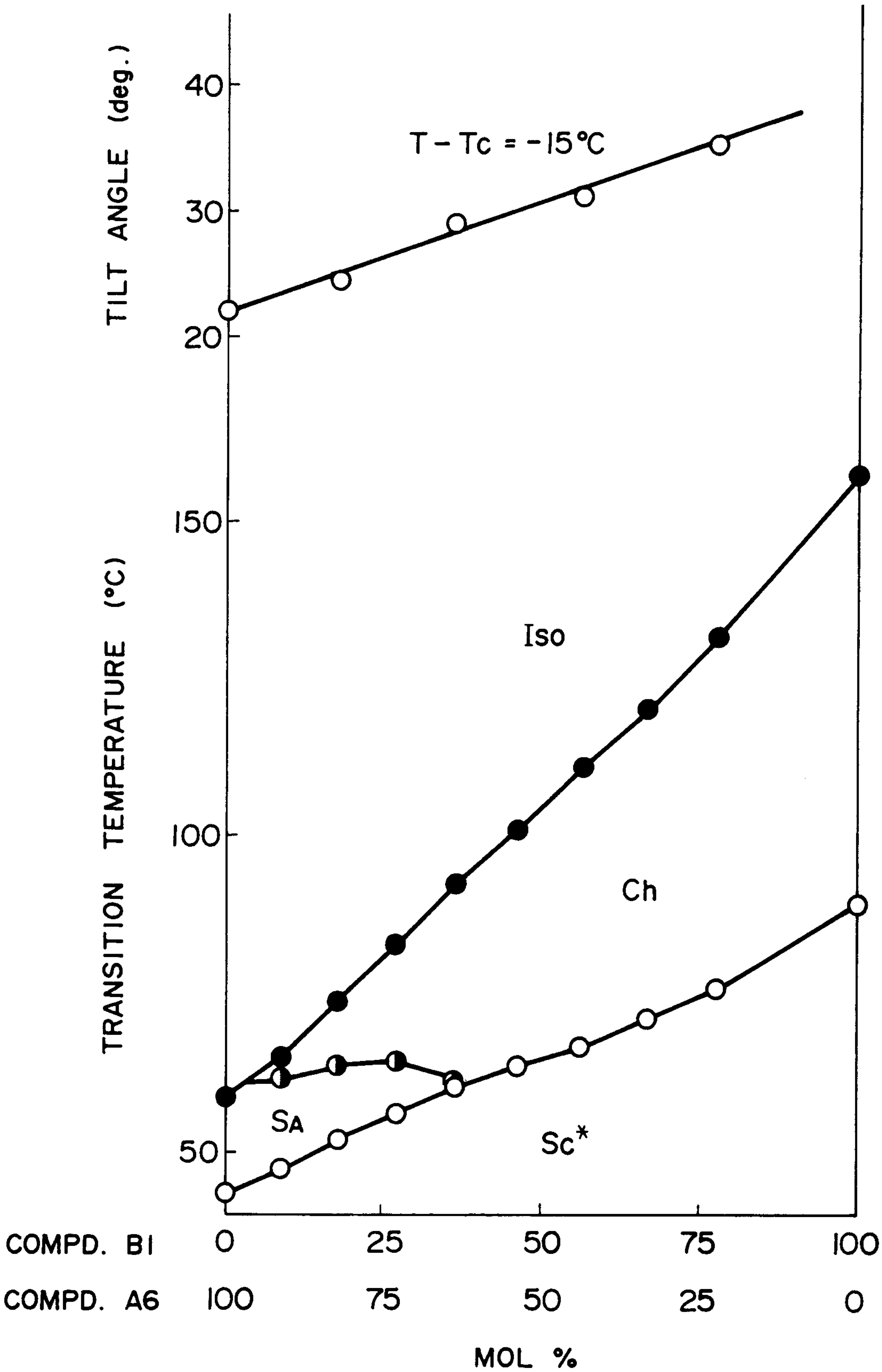
TILT ANGLE (deg.)
40
30
20
T - Tc = -15°C
TRANSITION TEMPERATURE (°C)
150
100
50
Iso
Ch
SA
Sc*
COMPD. B1
0
25
50
75
100
COMPD. A6
100
75
50
25
0
MOL. %

FIG. 3

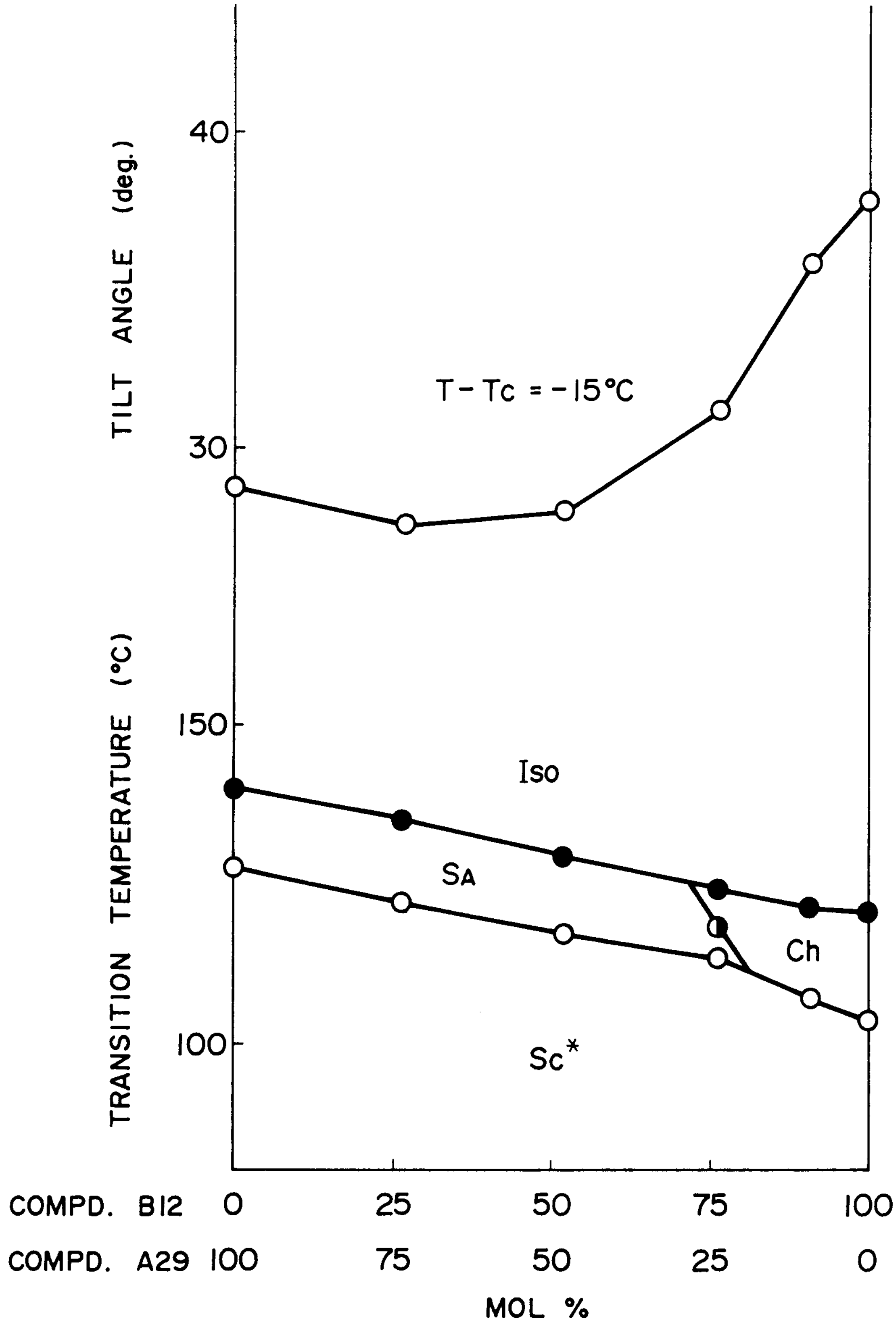
TILT ANGLE (deg.)
40
30
T - Tc = -15°C
TRANSITION TEMPERATURE (°C)
150
100
Iso
SA
Ch
Sc*
COMPD. B12 0 25 50 75 100
COMPD. A29 100 75 50 25 0
MOL %

FIG. 4

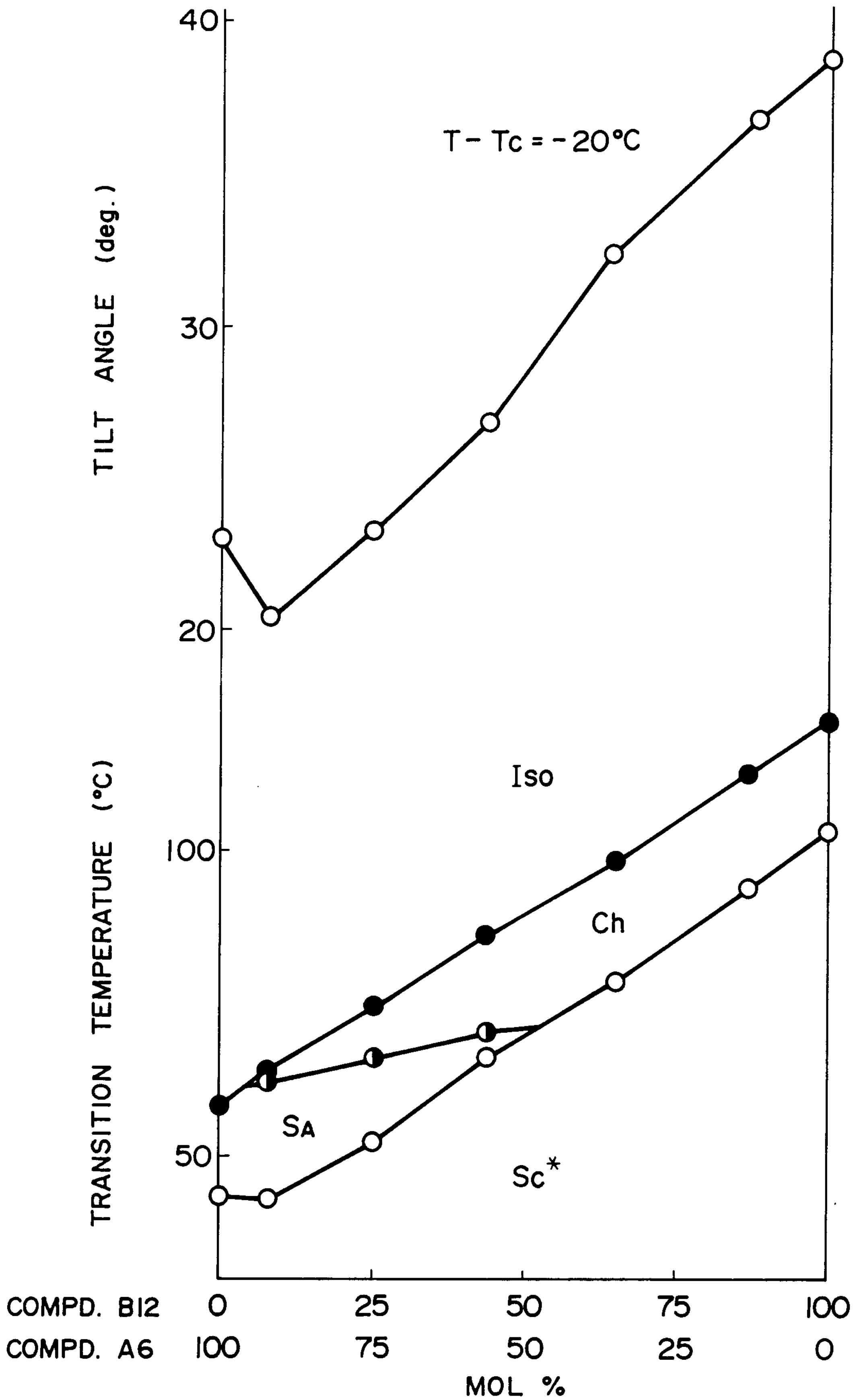
40
30
20
T - Tc = -20°C
TILT ANGLE (deg.)
Iso
Ch
100
50
SA
Sc*
TRANSITION TEMPERATURE (°C)
COMPD. B12 0 25 50 75 100
COMPD. A6 100 75 50 25 0
MOL %